# EUROPEAN PATENT APPLICATION

(11) **EP 4 521 260 A1**
(43) Date of publication of application: **12.03.2025**
(21) Application number: 23822688.0
(22) Date of filing: 07.03.2023
(51) Int. Cl.: G06F 16/13

(54) **DATA PROCESSING METHOD AND RELATED APPARATUS**

(30) Priority: 16.06.2022 CN 202210686298; 30.08.2022 CN 202211058557
(71) Applicant: Huawei Technologies Co., Ltd., Shenzhen, Guangdong 518129 (CN)
(72) Inventor: LAN, Longwen, Shenzhen, Guangdong 518129 (CN); CHENG, Zhuo, Shenzhen, Guangdong 518129 (CN); PAN, Hao, Shenzhen, Guangdong 518129 (CN); ZHOU, Wen, Shenzhen, Guangdong 518129 (CN); CHENG, Zhen, Shenzhen, Guangdong 518129 (CN); SU, Yi, Shenzhen, Guangdong 518129 (CN)
(74) Representative: Gill Jennings & Every LLP
(86) International application number: PCT/CN2023/080120
(87) International publication number: WO 2023/241116

(57) **Abstract**

Embodiments of this application provide a data processing method and a related apparatus, applied to the field of storage technologies. The data processing method includes: obtaining a first metadata stream of a first file system, where the first metadata stream is a streaming structure and includes a plurality of records, and each of the plurality of records includes an identifier of one node in the first file system, an identifier of a parent node of the node, and an attribute of the node; and determining a hierarchy of a plurality of nodes in the first file system based on the first metadata stream. **In** embodiments of this application, in a unified expression manner of metadata with a streaming structure, metadata between heterogeneous file systems can be streamlined. Therefore, data in the heterogeneous file systems is no longer isolated data islands. This greatly improves convenience of data use and management for a user.

## Description

### TECHNICAL FIELD

This application relates to the field of storage technologies, and in particular, to a data processing method and a related apparatus.

### BACKGROUND

Unstructured data is generally stored in a file system (local file system or NAS system) in a form of a file or an object. Heterogeneous file systems usually separately provide file read/write services externally according to access protocols of the heterogeneous file systems. For example, common access protocols include a network file system (network file system, NFS), a Hadoop distributed file system (Hadoop distributed file system, HDFS), a simple storage service (simple storage service, S3), and a server information block (Server Message Block, SMB). Data content of the file in the file system is stored in a storage disk. A computing device may access, according to a corresponding access protocol, the data content of the file stored in the storage disk.

As a scale of a user service increases, a single file system cannot meet a service requirement, and data of the user service may be stored in a plurality of heterogeneous file systems. Metadata management and access control modes of the heterogeneous file systems are different. Therefore, data stored in the heterogeneous file systems becomes isolated data islands. This brings great inconvenience to the user in data use and management.

How to resolve the foregoing problem is a hot issue that is being studied by persons skilled in the art.

### SUMMARY

Embodiments of this application provide a data processing method and a related apparatus, to express metadata of heterogeneous file systems in a unified manner, so as to improve convenience of data use and management for a user.

According to a first aspect, an embodiment of this application provides a data processing method, applied to a first computing device, and including:
obtaining a first metadata stream of a first file system, where the first metadata stream is a streaming structure and includes a plurality of records, and each of the plurality of records includes an identifier of one node in the first file system, an identifier of a parent node of the node, and an attribute of the node; and
determining a hierarchy of a plurality of nodes in the first file system based on the first metadata stream.

Optionally, a node is a file or a directory. The first file system includes the plurality of nodes, and the plurality of nodes include one or more files and/or one or more directories.

The streaming structure is a data structure that includes a plurality of records. Each record includes a plurality of values. Each value corresponds to one field. The streaming structure has the following features: read-only, append-only, and orderliness. "Read-only" means that the value of the record in the streaming structure can only be read but cannot be modified. "Append-only" indicates that only a new record can be appended to the streaming structure but an existing record cannot be deleted, but a plurality of records belonging to a same node may be merged into one record. "Orderliness" means that the records in the streaming structure have a logical sequence, and a to-be-appended record is added at an end of the streaming structure.

Optionally, one record in the streaming structure corresponds to one node. Further, a plurality of records may correspond to a same node.

In embodiments of this application, metadata of heterogeneous file systems is expressed in a unified manner by using a metadata stream with a streaming structure. In the unified expression manner, a difference between management and access control manners of the metadata between the heterogeneous file systems can be shielded, and a difference between devices that store the heterogeneous file systems can also be shielded. In other words, in the unified expression manner of the metadata with the streaming structure in this application, the metadata between the heterogeneous file systems can be streamlined. Therefore, data in the heterogeneous file systems is no longer isolated data islands. This greatly improves convenience of data use and management for a user.

In addition, a manner of uniformly expressing metadata of the file in this application is a streaming structure. Therefore, features of "read-only", "append-only", and "orderliness" of the streaming structure can reflect various change operations in a file system, that is, the expression manner of the metadata with the streaming structure in this application can dynamically reflect a change of the file system.

In a possible implementation of the first aspect, data of the first file system is stored in a first storage disk. The first metadata stream is from a second computing device. The second computing device is connected to the second storage disk. In this manner, the metadata of the heterogeneous file systems is shared and flowed between a plurality of computing devices in the unified expression manner (the metadata stream with the streaming structure). In this way, the plurality of computing devices all can conveniently determine a hierarchy of the heterogeneous file system based on the metadata stream of the streaming structure. This conveniently implements interworking and sharing of metadata of a file system between the plurality of devices. For example, the data of the first file system is stored in the first storage disk. The second computing device can determine the hierarchy of the first file system (the second computing device is connected to a first storage device, and the second computing device can access the data of the first file system and can determine the hierarchy of the first file system). When obtaining the first metadata stream of the first file system, the first computing device can also conveniently determine the hierarchy of the first file system based on the first metadata stream, and can construct a file view of the first file system based on the hierarchy of the first file system. In other words, in this manner, sharing and flow of metadata of the first file system between the first computing device and the second computing device are implemented. In this way, the user can determine the hierarchy of the first file system by using either of the first computing device and the second computing device (and can further determine, based on the hierarchy of the first file system, a file view that including the hierarchy of the first file system). This improves user experience.

In another possible implementation of the first aspect, the first computing device is located in a first data center. The second computing device and the first storage disk are located in a second data center. In other words, the first computing device, the second computing device, and the first storage device may be located in different data centers. This implements sharing and flow of metadata of the first file system between the different data centers. To be specific, a cross-data center (cross-domain) user can know the hierarchy of the first file system.

Further, the cross-data center (cross-domain) user can construct, based on the metadata stream (and/or the hierarchy of the first file system), the file view including the hierarchy of the first file system.

In still another possible implementation of the first aspect, the identifier of the node and the identifier of the parent node of the node are jointly used as an index of a group of records. The group of records are records of a same node in a same parent directory.

The identifier of the node is a unique identifier that is in a one-to-one correspondence with the node, and cannot be changed.

A group of records in the metadata stream is indexed by using the identifier of the node and the identifier of the parent node of the node. In one aspect, the identifier of the node and the identifier of the parent node can be used to indicate the hierarchy of the nodes. This helps determine the hierarchy of the nodes, and in a scenario in which the node can be moved, can reflect a change of the parent node of the node based on the index. In another aspect, the identifier of node is in the one-to-one correspondence with the node, and cannot be changed. Therefore, even if a name, a size, or a storage location of the node are changed, a record corresponding to the node can still be found by using the index. This improves search efficiency and result accuracy, and further improves stability and high availability of the metadata.

In a possible implementation of the first aspect, the attribute of the node includes indication information. The indication information indicates a change operation performed on the node.

The indication information may directly include a name of the change operation, or may indirectly indicate the change operation by using the identifier, a number, or the like.

Optionally, the change operation may include one or more of new addition (or creation), update, deletion, movement, and the like.

For example, the indication information may be described by using different values of a field. To be specific, the attribute of the node includes the following field: a change operation performed on the node. For example, a field name is an action field. When a value of the action field is "create", it indicates to newly add a node. When a value of the action field is update, it indicates to update the node. Certainly, a correspondence between a value of the field and the change operation, a name of the field, a ranking of the field, and the like may be set based on an actual requirement.

A change field can be used to record a node change. This can not only improve accuracy of the metadata, but also help implement sharing and flow of the metadata, and further helps implement view update of the file system on the plurality of devices.

In a possible implementation of the first aspect, the attribute of the node includes an identifier of a transaction related to the node. For example, the identifier of the transaction related to the node may be described by using different values of a field.

The identifier of the transaction may indicate a transaction. In this way, a plurality of records related to the transaction may be associated, so that the metadata has a capability of returning an invalid transaction. This helps ensure consistency of the file system in a process of sharing and flowing the metadata.

In a possible implementation of the first aspect, the attribute of the node includes a sequence number of the record. For example, the sequence number of the record may be described by using different values of a field.

The sequence number can be used to support a ranking of a queue message and a sequence modified by a plurality of parties, and also help implement data integrity check and recovery by the system.

In a possible implementation of the first aspect, the attribute of the node includes storage layout information of the node. For example, a sequence number of a record may be described by using different values of a field.

In this way, when data content of the node is stored in the plurality of devices, the storage layout information may indicate information about the device that stores the data content of the node, and assist another device in obtaining the data content from the actual storage device of the node.

In a possible implementation of the first aspect, the attribute of the node includes an extended attribute of the node. For example, the extended attribute of the node may be described by using different values of a field.

The extended attribute is an attribute obtained by extending the metadata based on different service scenarios. Attribute extension is supported. In this way, the user can define a new attribute of the node based on an actual use requirement, to improve flexibility and extendibility of the metadata.

In a possible implementation of the first aspect, the attribute of the node further includes one or more of a name (name), a type (type), a permission (mode), a snapshot identifier (snapid), a user identifier (uid), a user group identifier (gid), a size (size), a soft link (linkto), a creation time point (ctime), a modification time point (mtime), an access control list (acl), an extended attribute (attr), and the like.

In a possible implementation of the first aspect, the method further includes:
constructing a file view (referred to as a file view V1 for ease of differentiation), where the file view V1 includes the hierarchy of the plurality of nodes in the first file system.

The user or an application can conveniently obtain the hierarchy of the nodes and the attribute of the node by using the file view. This meets a visualization requirement for a hierarchy of the file system and the attribute of the node, thereby improving user experience.

In a possible implementation of the first aspect, the method further includes:
appending a first record to an end of the first metadata stream, where the first record includes an identifier of a first node, an identifier of a parent node of the first node, and a first attribute of the first node, and the first attribute includes a type of the change operation.

The first attribute is an example description provided for distinguishing another attribute (an attribute in another record or another attribute in a same record), and does not limit a difference between rankings, importance degrees, and the like of the first attribute and the another attribute.

In the foregoing implementation, the first file system can be changed by using the first computing device, that is, the first file system can be changed in a cross-data center or cross-domain manner. In addition, a change operation on the data in the first file system can be appended to the metadata stream in a manner of adding a record. The another device can learn the change operation in the first file system by obtaining a change (the appended record) of the metadata stream, and correspondingly, can update a hierarchy of local files or the attribute of the node of the first file system. This implements synchronization of the file view on the plurality of devices.

In a possible implementation, the method further includes:
obtaining a first input/output (input/output, I/O) request, where the first I/O request indicates to perform a change operation on the first node. In this manner, the change of the file system is implemented by using a metadata I/O request. This helps implement decoupling between the node change and an upper-layer application, thereby improving flexibility and scalability of a system (a system including the file system and the upper-layer applications).

In a possible implementation of the first aspect, the type of the change operation is new addition. The first node is a newly added file or directory in the first file system.

In a possible implementation of the first aspect, the type of the change operation is update, deletion, or movement. In this case, the first node is a file or a directory that already exists in the first file system.

Optionally, the first node is the file or the directory that already exists in the first file system. Therefore, the first metadata stream already includes a record corresponding to the first file.

For example, the first metadata stream includes a second record. The second record includes the identifier of the first node, the identifier of the parent node of the first node, and a second attribute of the first node. The second record is generated before the first record.

In still another possible implementation of the first aspect, the first record further includes a sequence number of the first record. The second record further includes a sequence number of the second record. The sequence number of the first record and the sequence number of the second record indicate that the first record is generated after the second record.

In a possible implementation of the first aspect, the method further includes:
sending a message to the second computing device, where the message indicates that the first metadata stream is changed, so that the second computing device performs the change operation on the first node based on the first record in the first metadata stream.

In a possible implementation of the first aspect, the method further includes:
when a newly added record appears at an end of the first metadata stream, updating the file view (for example, the file view V1) based on an updated first metadata stream, where an updated file view includes an updated hierarchy of the plurality of nodes in the first file system.

In this implementation, the first computing device can learn of a change in the first file system at any time based on the change (the newly added record) of the first metadata stream, update the hierarchy/a file attribute of the first file system based on the change, and update the file view.

In a possible implementation of the first aspect, the first metadata stream includes a third record. The third record includes an attribute of a second node in the first file system. The second node is a file. The attribute of the second node includes storage layout information of the second node. The storage layout information of the second node indicates a storage device to which the first storage disk belongs.

The method further includes:
obtaining a second I/O request, where the second I/O request indicates to read data of the second node; and
obtaining the data of the second node from the first storage disk.

In the foregoing implementation, the data of the first file system can be read by using the first computing device, that is, the data in the first file system may be read in the cross-data center or cross-domain manner.

In a possible implementation of the first aspect, the method further includes:
performing a merging operation on the first metadata stream, where the merging operation indicates to merge, into one record, a plurality of records corresponding to a same node in the first metadata stream. In this implementation, space occupied by the first metadata stream can be reduced, to reduce storage consumption of the solution.

In a possible implementation of the first aspect, the method further includes:
obtaining a second metadata stream of a second file system, where data of the second file system is stored in a second storage disk, the second metadata stream is from the second computing device connected to the second storage disk, or is from a third computing device connected to the storage disk of the second device, and the second computing device is different from the third computing device, where
the second metadata stream is a streaming structure and includes a plurality of records, and each of the plurality of records of the second metadata stream includes an identifier of one node in the second file system, an identifier of a parent node of the node in the second file system, and an attribute of the node in the second file system; and
constructing a file view (referred to as a file view V2 for ease of differentiation), where the file view V2 includes the hierarchy of the plurality of nodes in the first file system and a hierarchy of a plurality of nodes in the second file system, and the hierarchy of the plurality of nodes in the second file system is obtained based on the second metadata stream.

In this implementation, the first computing device can obtain metadata streams of a plurality of file systems, and determine a hierarchy of the plurality of file systems based on the metadata streams, and then can construct a file view including the hierarchy of the plurality of file systems.

Optionally, the file view V2 may be a file view obtained by updating the file view V1. Specifically, the file view V1 includes the hierarchy of the plurality of nodes of the first file system. The first computing device may add the hierarchy of the plurality of nodes of the second file system to the file view V1, to update the file view V1 to obtain the file view V2. In a possible implementation of the first aspect, the method further includes:
scanning a hierarchy of a plurality of nodes in a third file system, where data of the third file system is stored in a third storage disk connected to the first computing device;
constructing a third metadata stream based on the hierarchy of the plurality of nodes in the third file system, where the third metadata stream is a streaming structure and includes a plurality of records, and each of the plurality records includes an identifier of one node in the third file system, an identifier of a parent node of the node in the third file system, and an attribute of the node in the third file system; and
sending the third metadata stream to the second computing device, so that the second computing device determines the hierarchy of the plurality of nodes in the third file system based on the third metadata stream.

In this implementation, the first computing device can further construct the third metadata stream based on a local file system (the third file system, where a storage device that stores the third file system is connected to the first computing device), and send the third metadata stream to another computing device. In this way, the another computing device determines the hierarchy of the third file system, and then the user can access the data of the third file system by using the another computing device.

In a possible implementation of the first aspect, a hard link node exists in the third file system. The constructing a third metadata stream based on the hierarchy of the plurality of nodes in the third file system includes:
constructing the third metadata stream based on the hierarchy of the plurality of nodes in the third file system and a data collection status (ingestor state), where the data collection status indicates a node having a hard link and a list of a parent node of the node having the hard link.

There are a large quantity of nodes in the file system. Therefore, checking whether the nodes in the file system are hard link nodes one by one consumes a lot of computing capabilities and duration. Therefore, the ingestor state is used to record the node having the hard link and the list of the parent node of the node having the hard link. This can reduce duration for constructing a data stream, and reduce computation consumption, improve accuracy of information in the metadata stream, thereby improving convenience of data use and management for the user.

In a possible implementation of the first aspect, the method further includes:
constructing a file view (referred to as a file view V3 for ease of differentiation), where the file view V3 includes the hierarchy of the plurality of nodes in the third file system.

Optionally, the file view V3 may further include the hierarchy of the plurality of nodes in the first file system. Further, the file view V3 may be an updated file view obtained by updating the file view V1. Specifically, the file view V1 includes the hierarchy of the plurality of nodes of the first file system. The first computing device may add the hierarchy of the plurality of nodes of the third file system to the file view V1, to update the file view V1 to obtain the file view V3.

Alternatively, optionally, the file view V3 may include the hierarchy of the plurality of nodes in the second file system. Further, the file view V3 may be an updated file view obtained by updating the file view V2. For example, the file view V2 includes the hierarchy of the plurality of nodes in the first file system and the hierarchy of the plurality of nodes in the second file system, the first computing device may add the hierarchy of plurality of nodes in the third file system to the file view V2, to update the file view V2 to obtain the file view V3. In a possible implementation of the first aspect, a storage system that stores the first file system and a storage system that stores the third file system may be heterogeneous.

In still another possible implementation of the first aspect, the first computing device and the third storage disk are included in the first storage device. The second computing device and the first storage disk are included in the second storage device. The first storage device and the second storage device are heterogeneous storage devices.

In a possible implementation of the first aspect, the first computing device accesses the third storage disk by using a first protocol. The second computing device accesses the first storage disk by using a second protocol. The first protocol is different from the second protocol. To be specific, the first file system and the third file system may be heterogeneous file systems.

In a possible implementation of the first aspect, the first data stream includes a fourth record. The fourth record includes a node identifier field, a parent node identifier field, and an attribute of a third node. The node identifier field in the fourth record is an identifier of the third node. The parent node identifier field in the fourth record is an identifier of a fourth node. The fourth node is a directory.

The method further includes:
obtaining a third I/O request, where the third I/O request indicates to create a hard link node of the third node in a fifth node, and the fifth node is a directory; and
appending a fifth record, a sixth record, and a seventh record to the end of the first metadata stream, where
the fifth record includes a node identifier field, a parent node identifier field, and the attribute of the third node, the node identifier field in the fifth record is the identifier of the third node, and the parent node identifier field in the fifth record is the identifier of the third node;
the sixth record includes a node identifier field and a parent node identifier field, the node identifier field in the sixth record is the identifier of the third node, and the parent node identifier field in the sixth record is the identifier of the fourth node; and
the seventh record includes a node identifier field and a parent node identifier field, the node identifier field in the seventh record is the identifier of the third node, and the parent node identifier field in the sixth record is an identifier of the fifth node.

Optionally, the node identifier field is an inode, and the parent node identifier field is a pinode. In the foregoing implementation, a value of the pinode is usually the identifier of the parent node of the node. However, in a scenario in which a hard link is created, a manner in which a value of a pinode is the same as a value of an inode indicates that a node has a hard link node.

It can be learned that the metadata stream may be compatible with a file system including a hard link. This implements expressing metadata of a hard link node in the file system in the unified manner, thereby further improving convenience of data use and management for the user.

In a possible implementation of the first aspect, the method further includes:
obtaining a fourth I/O request, where the fourth I/O request indicates to delete the hard link node of the third node in the fifth node; and
appending an eighth record to the end of the first metadata stream, where
the eighth record includes a node identifier field, a parent node identifier field, and the attribute of the third node, the node identifier field in the eighth record is the identifier of the third node, the parent node identifier field in the eighth record is the identifier of the fifth node, and the attribute of the third node in the eighth record includes an identifier indicating a deletion operation.

In the foregoing implementation, a change of the metadata stream in a scenario of deleting the hard link is described. An operation of deleting the hard link can be indicated by appending a record to the metadata stream. This can conveniently implement interworking and sharing of metadata of a file system between the plurality of devices, thereby greatly improving convenience in data use and management for the user.

In a possible implementation of the first aspect, the method further includes:
if the hard link node of the third node does not exist, appending a ninth record and a tenth record to the end of the first data stream, where
the ninth record includes a node identifier field, a parent node identifier field, and the attribute of the third node, the node identifier field in the ninth record is the identifier of the third node, and the parent node identifier field in the ninth record is the identifier of the fourth node; and
the tenth record includes a node identifier field, a parent node identifier field, and the attribute of the third node, the node identifier field in the tenth record is the identifier of the third node, the parent node identifier field in the tenth record is the identifier of the third node, and the attribute of the third node in the tenth record includes the identifier indicating the deletion operation.

In the foregoing implementation, a change of the metadata stream in a scenario in which the node having a hard link is restored to a common node (different from the node having the hard link) is described. A manner of appending a record to the metadata stream can be used to indicate to restore, to the common node, the node having the hard link. This can conveniently implement interworking and sharing of metadata of a file system between the plurality of devices, thereby further improving convenience in data use and management for the user.

According to a second aspect, an embodiment of this application provides a metadata sharing system. The metadata sharing system includes a first computing device and a second computing device. The second computing device is connected to a first storage disk. The first storage disk stores data of a first file system. The first computing device is configured to implement the method according to any one of the implementations of the first aspect and the possible.

In a possible implementation of the second aspect, the second computing device is configured to:
scan a hierarchy of a plurality of nodes in the first file system;
construct a first metadata stream based on the hierarchy of the plurality of nodes in the first file system, where the first metadata stream is a streaming structure and includes a plurality of records, and each record includes an identifier of one node in the first file system, an identifier of a parent node of the node in the first file system, and an attribute of the node in the first file system; and
send the first data stream to the first computing device.

The first computing device is configured to:
obtain the first data stream from the second computing device; and
determine the hierarchy of the plurality of nodes in the first file system based on the first metadata stream.

In a possible implementation of the second aspect, the first computing device is further configured to construct a file view (referred to as a file view V1 for ease of differentiation), where the file view V1 includes the hierarchy of the plurality of nodes in the first file system.

In a possible implementation of the second aspect, the second computing device is further configured to construct a file view (referred to as a file view V4 for ease of differentiation), where the file view V4 includes the hierarchy of the plurality of nodes in the first file system.

In a possible implementation of the second aspect, the first computing device is further configured to:
obtain a first input/output I/O request, where the first I/O request indicates to perform a change operation on a first node; and
append a first record to an end of the first metadata stream, where the first record includes an inode of the first node, a pinode of the first node, and a changed first attribute of the first node, where the changed first attribute of the first node includes a type of the change operation.

The second computing device is further configured to:
obtain the first record in the first metadata stream; and
perform the change operation on the first node based on the first record in the first metadata stream.

In a possible implementation of the second aspect, the first computing device is further configured to:
send a message to the second computing device, where the message indicates that the first metadata stream is changed.

The second computing device is further configured to:
obtain the message.

In a possible implementation of the second aspect, the first computing device is further configured to:
when a newly added record appears at an end of the first metadata stream, update the file view based on an updated first metadata stream, where an updated file view includes an updated hierarchy of the plurality of nodes in the first file system.

The second computing device is further configured to:
when the newly added record appears at the end of the first metadata stream, update the file view V4 based on the updated first metadata stream, where an updated file view V4 includes the updated hierarchy of the plurality of nodes in the first file system.

In a possible implementation of the second aspect, the metadata stream includes a second record. The second record includes an attribute of a second node in the second file system. The second node is a file.

The attribute of the second node includes storage layout information of the second node. The storage layout information of the second node indicates a storage device to which the first storage disk belongs.

The first computing device is further configured to:
obtain a second I/O request, where the second I/O request indicates to read data of the second node; and
obtain the data of the second node from the first storage disk.

In a possible implementation of the second aspect, the first computing device is further configured to:
respond to the second I/O request with data content of the second node.

In a possible implementation of the second aspect, the first computing device is further configured to:
perform a merging operation on the first metadata stream, where the merging operation indicates to merge, into one record, a plurality of records corresponding to a same node in the first metadata stream.

In a possible implementation of the second aspect, the second computing device is further configured to:
perform a merging operation on the first metadata stream, where the merging operation indicates to merge, into one record, a plurality of records corresponding to a same node in the first metadata stream.

In a possible implementation of the second aspect, the metadata sharing system further includes a third computing device. The third computing device is configured to:
send a second metadata stream of a second file system to the first computing device, where data of the second file system is stored in a second storage disk connected to the third computing device.

The second metadata stream is a streaming structure and includes a plurality of records. Each of the plurality of records of the second metadata stream includes an identifier of one node in the second file system, an identifier of a parent node of the node in the second file system, and an attribute of the node in the second file system.

The first computing device is further configured to:
obtain the second metadata stream; and
construct a file view (referred to as a file view V2 for ease of differentiation), where the file view V2 includes the hierarchy of the plurality of nodes in the first file system and a hierarchy of a plurality of nodes in the second file system, and the hierarchy of the plurality of nodes in the second file system is obtained based on the second metadata stream.

Optionally, the file view V2 may be obtained by updating the file view V1 or by updating a file view V3.

In a possible implementation of the second aspect, the first computing device is further configured to:
scan a hierarchy of a plurality of nodes in a third file system, where data of the third file system is stored in a third storage disk, and the first computing device is connected to the third storage disk;
construct a third metadata stream based on the hierarchy of the plurality of nodes in the third file system; and
send the third metadata stream to the second computing device.

The second computing device is further configured to:
obtain the third data stream from the first computing device; and
determine the hierarchy of the plurality of nodes in the third file system based on the third metadata stream.

In a possible implementation of the second aspect, the first computing device is further configured to:
construct a file view (referred to as a file view V3 for ease of differentiation), where the file view V3 includes a hierarchy of the first file system and the hierarchy of the third file system.

Optionally, the file view V3 may be obtained by updating the file view V2 or updating the file system V2.

In a possible implementation of the second aspect, the second computing device is further configured to:
construct a file view (referred to as a file view V5 for ease of differentiation), where the file view V5 includes the hierarchy of the plurality of nodes in the first file system and the hierarchy of the plurality of nodes in the third file system.

Optionally, the file view V5 may be obtained by updating the file view V4.

In a possible implementation of the second aspect,
the second computing device and the first storage disk are included in a first storage device, the first computing device and the third storage disk are included in a second storage device, and the first storage device and the second storage device are heterogeneous.

In a possible implementation of the second aspect, the first file system is accessed by a host according to a first access protocol, the third file system is accessed by a host according to a second access protocol, and the first access protocol is different from the second access protocol.

According to a third aspect, an embodiment of this application provides a computing apparatus. The computing apparatus includes a communication module and a processing module. The computing apparatus is configured to implement the method according to any one of the possible implementations of the first aspect and the possible.

In a possible implementation of the third aspect, the communication module is configured to obtain a first metadata stream of a first file system. The first metadata stream is from a second computing device. The first metadata stream is a streaming structure and includes a plurality of records. Each record includes an identifier of one node in the first file system, an identifier of a parent node of the node in the first file system, and an attribute of the node in the first file system.

The processing module is further configured to determine a hierarchy of a plurality of nodes in the first file system based on the first metadata stream.

In another possible implementation of the third aspect, the processing module is further configured to:
construct a file view (referred to as a file view V1 for ease of differentiation), where the file view V1 includes the hierarchy of the plurality of nodes in the first file system.

In still another possible implementation of the third aspect, the processing module and the communication module are further configured to:
append a first record to an end of the first metadata stream, where the first record includes an identifier of a first node, an identifier of a parent node of the first node, and a first attribute of the first node, and the first attribute includes a type of a change operation.

In still another possible implementation of the third aspect, the communication module is further configured to:
obtain a first input/output (input/output, I/O) request, where the first I/O request indicates to perform a change operation on the first node.

In still another possible implementation of the third aspect, the communication module is further configured to:
send a message to the second computing device, where the message indicates that the first metadata stream is changed, so that the second computing device performs the change operation on the first node based on the first record in the first metadata stream.

In still another possible implementation of the third aspect, the communication module and the processing module are further configured to:
when a newly added record appears at an end of the first metadata stream, update the file view (for example, the file view V1) based on an updated first metadata stream, where an updated file view includes an updated hierarchy of the plurality of nodes in the first file system.

In still another possible implementation of the third aspect, the communication module and the processing module are further configured to:
obtain a second I/O request, where the second I/O request indicates to read data of a second node, and the second node belongs to the first file system; and
obtain the data of the second node from a first storage disk.

In still another possible implementation of the third aspect, the first metadata stream includes a third record. The third record includes an attribute of a second node in the first file system. The second node is a file. The attribute of the second node includes storage layout information of the second node. The storage layout information of the second node indicates a storage device to which the first storage disk belongs.

In still another possible implementation of the third aspect, the processing module and the communication module are further configured to:
perform a merging operation on the first metadata stream, where the merging operation indicates to merge, into one record, a plurality of records corresponding to a same node in the first metadata stream. In this implementation, space occupied by the first metadata stream can be reduced, to reduce storage consumption of the solution.

In still another possible implementation of the third aspect, the communication module is further configured to:
obtain a second metadata stream of a second file system, where data of the second file system is stored in a second storage disk, the second metadata stream is from the second computing device connected to the second storage disk, or is from a third computing device connected to the storage disk of the second device, and the second computing device is different from the third computing device.

The second metadata stream is a streaming structure and includes a plurality of records. Each of the plurality of records of the second metadata stream includes an identifier of one node in the second file system, an identifier of a parent node of the node in the second file system, and an attribute of the node in the second file system.

The processing module is further configured to construct a file view (referred to as a file view V2 for ease of differentiation). The file view V2 includes the hierarchy of the plurality of nodes in the first file system and a hierarchy of a plurality of nodes in the second file system. The hierarchy of the plurality of nodes in the second file system is obtained based on the second metadata stream.

In still another possible implementation of the third aspect, the processing module is further configured to:
scan a hierarchy of a plurality of nodes in a third file system, where data of the third file system is stored in a third storage disk connected to the first computing device; and
construct a third metadata stream based on the hierarchy of the plurality of nodes in the third file system, where the third metadata stream is a streaming structure and includes a plurality of records, and each of the plurality records includes an identifier of one node in the third file system, an identifier of a parent node of the node in the third file system, and an attribute of the node in the third file system.

The communication module is further configured to:
send the third metadata stream to the second computing device, so that the second computing device determines the hierarchy of the plurality of nodes in the third file system based on the third metadata stream.

In still another possible implementation of the third aspect, a hard link node exists in the third file system. The processing module is further configured to:
construct the third metadata stream based on the hierarchy of the plurality of nodes in the third file system and a data collection status (ingestor state), where the data collection status indicates a node having a hard link and a list of a parent node of the node having the hard link.

In still another possible implementation of the third aspect, the first data stream includes a fourth record. The fourth record includes a node identifier field, a parent node identifier field, and an attribute of a third node. The node identifier field in the fourth record is an identifier of the third node. The parent node identifier field in the fourth record is an identifier of a fourth node. The fourth node is a directory. The communication module is further configured to:
obtain a third I/O request, where the third I/O request indicates to create a hard link node of the third node in a fifth node, and the fifth node is a directory; and
append a fifth record, a sixth record, and a seventh record to the end of the first metadata stream.

The fifth record includes a node identifier field, a parent node identifier field, and the attribute of the third node. The node identifier field in the fifth record is the identifier of the third node. The parent node identifier field in the fifth record is the identifier of the third node.

The sixth record includes a node identifier field and a parent node identifier field. The node identifier field in the sixth record is the identifier of the third node. The parent node identifier field in the sixth record is the identifier of the fourth node.

The seventh record includes a node identifier field and a parent node identifier field. The node identifier field in the seventh record is the identifier of the third node. The parent node identifier field in the sixth record is an identifier of the fifth node.

In still another possible implementation of the third aspect, the communication module is further configured to:
obtain a fourth I/O request, where the fourth I/O request indicates to delete the hard link node of the third node in the fifth node; and
append an eighth record to the end of the first metadata stream.

The eighth record includes a node identifier field, a parent node identifier field, and the attribute of the third node. The node identifier field in the eighth record is the identifier of the third node. The parent node identifier field in the eighth record is the identifier of the fifth node. The attribute of the third node in the eighth record includes an identifier indicating a deletion operation.

In still another possible implementation of the third aspect, the communication module is further configured to:
if the hard link node of the third node does not exist, append a ninth record and a tenth record to the end of the first data stream.

The ninth record includes a node identifier field, a parent node identifier field, and the attribute of the third node. The node identifier field in the ninth record is the identifier of the third node. The parent node identifier field in the ninth record is the identifier of the fourth node.

The tenth record includes a node identifier field, a parent node identifier field, and the attribute of the third node. The node identifier field in the tenth record is the identifier of the third node. The parent node identifier field in the tenth record is the identifier of the third node. The attribute of the third node in the tenth record includes the identifier indicating the deletion operation.

According to a fourth aspect, an embodiment of this application provides metadata of a node (where the node is a file or a directory in a file system). The metadata of the node includes an identifier of the node, an identifier of a parent node of the node, and an attribute of the node. The attribute of the node includes one or more of the following fields:
a change operation performed on the node, an identifier of a transaction related to the node, a sequence number of the metadata of the node, storage layout information of the node, and an extended attribute of the node.

According to a fifth aspect, an embodiment of this application provides a metadata stream of a file system. The metadata stream is a streaming structure and includes a plurality of records. Each of the plurality of records includes an identifier of one node in the first file system, an identifier of a parent node of the node, and an attribute of the node. The node is a file or a directory.

The streaming structure is a data structure that includes a plurality of records. Each record includes a plurality of values. Each value corresponds to one field. The streaming structure has the following features: read-only, append-only, and orderliness. "Read-only" means that the value of the record in the streaming structure can only be read but cannot be modified. "Append-only" indicates that only a new record can be appended to the streaming structure but an existing record cannot be deleted, but a plurality of records belonging to a same node may be merged into one record. "Orderliness" means that the records in the streaming structure have a logical sequence, and a to-be-appended record is added at an end of the streaming structure.

In a possible implementation of the fifth aspect, the identifier of the node and the identifier of the parent node of the node are jointly used as an index of a group of records. The group of records are records of a same node in a same parent directory.

In another possible implementation of the fifth aspect, the attribute of the node includes one or more of the following fields:
a change operation performed on the node, an identifier of a transaction related to the node, a sequence number of the metadata of the node, storage layout information of the node, and an extended attribute of the node.

In still another possible implementation of the fifth aspect, the metadata stream is shared by a plurality of devices. When a device appends a new record to an end of the metadata stream, the plurality of devices that share the metadata stream may read the newly added record from the metadata stream, to obtain a change of the file system, and implement synchronization of the change of the file system.

In still another possible implementation of the fifth aspect, the metadata stream includes a checkpoint (checkpoint) and a CDC stream.

In the checkpoint, one node corresponds to only one record. To be specific, an index of each record in the checkpoint is unique.

The CDC stream is obtained by appending a record to the checkpoint.

In still another possible implementation of the fifth aspect, the metadata stream may be merged. A plurality of records corresponding to a same node may be merged into one record through a merging operation.

According to a sixth aspect, an embodiment of this application provides a computing device. The computing device includes a processor and a memory. The processor is configured to execute instructions stored in the memory, to enable the computing device to implement the method according to any one of the possible implementations of the first aspect and the possible.

Optionally, the computing device further includes a communication interface. The communication interface is configured to receive and/or send data, and/or the communication interface is configured to provide an input and/or output for the processor.

It should be noted that, in the foregoing embodiment, an example in which the processor (or referred to as a general-purpose processor) that perform the method by invoking the computer instructions are used for description. In a specific implementation process, the processor may alternatively be a dedicated processor. In this case, the computer instructions are already preloaded on the processor. Optionally, the processor may alternatively include both a dedicated processor and a general-purpose processor.

Optionally, the processor and the memory may be further integrated into one component, that is, the processor and the memory may be further integrated together.

According to a seventh aspect, an embodiment of this application further provides a computing device cluster. The computing device cluster includes at least one computing device. Each computing device includes a processor and a memory.

The processor of the at least one computing device is configured to execute instructions stored in the memory of the at least one computing device, to enable the computing device cluster to perform the method according to any one of the possible implement ions of the first aspect.

According to an eighth aspect, an embodiment of this application provides a computer-readable storage medium. The computer-readable storage medium stores instructions. When the instructions are run on at least one processor, the method according to any one of the possible implementations of first second aspect is implemented.

According to a ninth aspect, this application provides a computer program product. The computer program product includes computer instructions. When the instructions are run on at least one processor, the method according to any one of the possible implementations the first aspect is implemented.

Optionally, the computer program product may be a software installation package or an image package. When the foregoing method needs to be used, the computer program product may be downloaded, and the computer program product is executed on a computing device.

For beneficial effects of the technical solutions provided in the second aspect to the ninth aspect of this application, refer to the beneficial effects of the technical solutions in the first aspect. Details are not described herein again.

### BRIEF DESCRIPTION OF DRAWINGS

The following briefly describes the accompanying drawings used to describe embodiments.
FIG. 1 is a diagram of a file system including a plurality of nodes according to an embodiment of this application;
FIG. 2 is a diagram of a metadata structure according to an embodiment of this application;
FIG. 3 is a diagram of a metadata format according to an embodiment of this application;
FIG. 4 is a diagram of a scenario of a file change and a metadata change according to an embodiment of this application;
FIG. 5 is a diagram of a metadata stream according to an embodiment of this application;
FIG. 6A is a diagram of a record according to an embodiment of this application;
FIG. 6B is a diagram of another record according to an embodiment of this application;
FIG. 6C is a diagram of two records according to an embodiment of this application;
FIG. 6D is a diagram of a record according to an embodiment of this application;
FIG. 7 is a diagram of another metadata stream according to an embodiment of this application;
FIG. 8 is a diagram of still another metadata stream according to an embodiment of this application;
FIG. 9 is a diagram of an architecture of a metadata sharing system according to an embodiment of this application;
FIG. 10 is a diagram of an architecture of another metadata sharing system according to an embodiment of this application;
FIG. 11 is a diagram of an operating scenario of a metadata sharing system according to an embodiment of this application;
FIG. 12 is a diagram of another operating scenario of a metadata sharing system according to an embodiment of this application;
FIG. 13 is a schematic flowchart of a data processing method according to an embodiment of this application;
FIG. 14 is a diagram of a hierarchy and a metadata stream of a file system according to an embodiment of this application;
FIG. 15 is a schematic flowchart of another data processing method according to an embodiment of this application;
FIG. 16 is a schematic flowchart of still another data processing method according to an embodiment of this application;
FIG. 17A is a diagram of an inode of a file system including a hard link according to an embodiment of this application;
FIG. 17B shows a view of a file system according to an embodiment of this application;
FIG. 17C is a diagram of a metadata stream according to an embodiment of this application;
FIG. 18A is a diagram of a file system and a metadata stream of the file system that exist before a hard link is created according to an embodiment of this application;
FIG. 18B is a diagram of a file system and a metadata stream of the file system that are obtained after a hard link is created according to an embodiment of this application;
FIG. 18C is a diagram of another file system and a metadata stream of another file system that are obtained after a hard link is created according to an embodiment of this application;
FIG. 19A is a diagram of a file system and a metadata stream of the file system that are obtained after a hard link node is deleted according to an embodiment of this application;
FIG. 19B is a diagram of a file system and a metadata stream of the file system that are obtained after a hard link node is deleted according to an embodiment of this application;
FIG. 20 is a diagram of a structure of a computing apparatus according to an embodiment of this application; and
FIG. 21 is a diagram of a structure of a computing device according to an embodiment of this application.

### DESCRIPTION OF EMBODIMENTS

The following describes embodiments of this application in detail with reference to the accompanying drawings.

For ease of understanding, the following provides, for reference, example descriptions of some concepts related to embodiments of this application. Details are as follows.
1. File system: The file system is a method and a data structure that are used to specify a file in a storage disk (for example, a magnetic disk, a solid state drive, or a partition), namely, a method for organizing the file in the storage disk. A main function of the file system is to enable a user to conveniently read and write the file. For example, the user provides an identifier (for example, a name of the file or a path of the file) of a specified file for the file system, and the file system may access data of the corresponding file.

Read and write on the file are completed according to an access protocol of the file system. According to different access protocols used by read and write services of the file, the file system may include the following types of file systems: a network file system (network file system, NFS), a file system based on a server message block (server message block, SMB) protocol, a common internet file system (common internet file system, CIFS), a simple storage service (simple storage service, S3), a Hadoop distributed file system (Hadoop distributed file system, HDFS), an object storage service (object storage service, OBS), and the like.

It should be understood that the file system in this application is a system that has a tree hierarchy and that provides storage and access services for a plurality of files. In some scenarios, a name of a system having a similar feature may not be necessarily referred to as a file system, but is collectively referred to as the file system in embodiments of this application.

For example, when some object systems store objects, there is also a tree hierarchy between a plurality of objects, and this also falls within the scope of the "file system" in embodiments of this application. Optionally, data content of the file stored in the file system is generally unstructured data like data without a fixed structure, for example, a document, a picture, a video, or an audio.

2. Node (node) and inode: In embodiments of this application, the node is used to represent a file and/or a directory in a file system. In other words, a node may be a file or a directory. When there are a plurality of nodes, the plurality of nodes may be all files, all directories, or partially files and partially directories.

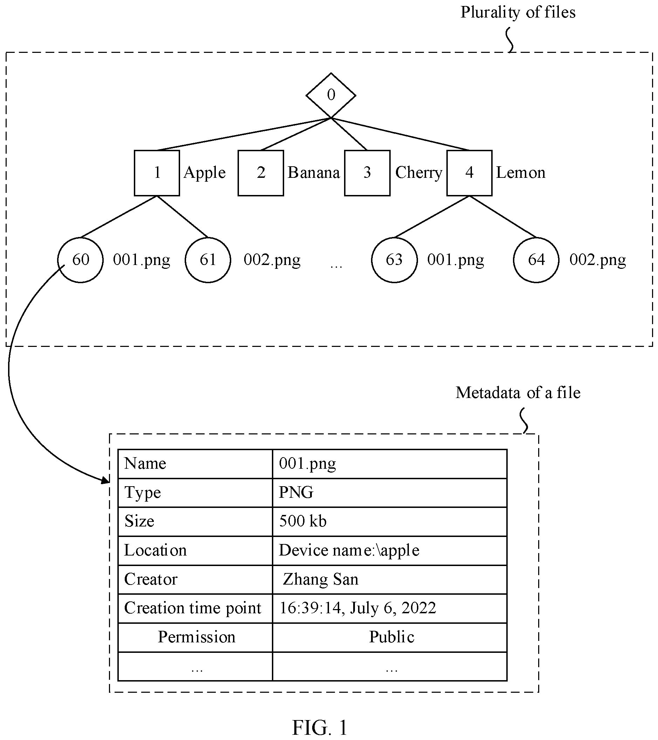

FIG. 1 is a diagram of a file system including a plurality of nodes according to an embodiment of this application. The plurality of nodes include a plurality of files and a plurality of directories. In FIG. 1, for ease of understanding, the directory is represented by using a block (for ease of differentiation, a root directory is a rhombic) pattern, and the file is represented by using a circular pattern. Certainly, this is not intended to mean that the files and the directories are different in storage mode and presentation mode. In addition, a node number, a node arrangement ranking, a node name, and the like are merely examples, and are not intended to limit this application.

Different nodes are distinguished by using identifiers of the nodes. The identifier of the node is unique. It should be understood that the different nodes herein are nodes that have different data content physically. In some scenarios, different node names in different directories pointing to same data content in a storage disk should be considered as a same node (for example, in a scenario like a hard link or a soft link).

In some possible scenarios, data content of the node is stored in the storage disk, and the file system also needs to find a place to store meta information of the node. In a possible solution, the meta information of the node is stored in the inode. The inode is a data structure, and includes some information related to the node, for example, one or more of a location of the data content of the node (for example, a location of a data block block), a quantity of bytes of the node, permission (for example, read permission, write permission, or execution permission) of the node, a timestamp (for example, a creation time point, a time point of a last change, or a time point of last opening) of the node, and a quantity of links (namely, a quantity of nodes whose names point to the inode).

In this case, the identifier of the node may be an identifier of the inode, for example, an inode number (inode number) or an inode index (inode index).

It should be noted that, because the identifier of the node may uniquely correspond to one inode, persons skilled in the art usually directly use the inode to represent the identifier of the node. In some embodiments of this application, the inode is also used to represent the identifier of the node.

In some scenarios, the inode is used to store metadata of the node. In some possible designs, the inode is a basic metadata format of the node. Based on the inode, a computing device may obtain metadata that is in another format or meets a specific user requirement.

3. File, data, and metadata: The file, also referred to as a computer file, is an information set. The file includes the data and the metadata. The data is data content of the file. The metadata is information describing the file, for example, a file name, a file size, and a file type.

The file system shown in FIG. 1 includes a file whose name is "001.png", a file whose name is "002.png", and the like. The metadata of the file describes the name, the type, the size, a location, a creator, a creation time point, or permission of the file. It should be understood that the metadata of the file herein is example metadata.

Optionally, the metadata may be metadata in a private format of the file system. For example, an Ext4 file system is used in a Linux system, and the Linux system has a metadata format applicable to the Ext4 file system.

4. Directory: To facilitate access and management on a file, a mapping relationship between a file name and a physical address needs to be established. A data structure that reflects the mapping relationship is referred to the directory or a file directory.

### 5. Heterogeneous file systems

The heterogeneous file systems are file systems that have different access (and/or control) modes or have different metadata formats. Usually, file systems of different types are usually heterogeneous file systems, and file systems provided by different vendors are also usually heterogeneous file systems.

Homogeneous file systems are opposite to the heterogeneous file systems. A global data access system may be implemented between the homogeneous file systems through unified metadata management and data access control.

### 6. Transaction

The transaction is an order of operations. These operations are all performed or are all not performed. The transaction is an indivisible working unit. For example, two operations are included in moving a file from a directory 1 to directory 2: deleting the file from the directory 1 and newly adding the file to the directory 2. The two operations are associated and indivisible. Therefore, it also needs to ensure that the file is newly added to the directory 2 when the file is deleted from the directory 1. If either of the two operations fails to be performed, both the two operations should be canceled or rolled back, to avoid data inconsistency generated when a problem occurs in an intermediate link of the operations.

7. Change data capture (Change Data Capture, CDC): through change data capture, changes of data (including new addition, update, deletion, or the like of the data) are monitored and captured. These changes are completely recorded in an occurrence sequence, and are written into message middleware for another service to subscribe to and consume.

### 8. Message queue

The message queue is a data structure, and may be understood as a list including one or more messages. The message is stored in the message queue before being processed and deleted. A message sender may interact with a message receiver by using a message queue service. It should be understood that, for ease of description, in this application, a data structure including a plurality of messages is collectively referred to as a message queue, and this is not intended to limit implementing the message queue in a manner of a queue. For example, in a specific implementation process, the message queue may alternatively be implemented in a manner of a list, a heap, a linked list, or a stack.

9. Hard link: The hard link means a phenomenon that different node names are linked to a same piece of data content.

For example, meta information of a node is stored by using an inode, that is, a file system has two directories (referred to as a directory A and a directory B for ease of distinguishing) and two nodes (referred to as a node file 1 and a node file 2 for ease of distinguishing). A parent directory of the node file 1 is a folder A, and an inode of the node file 1 is 1. A parent directory of the node file 2 is a folder B, and an inode of the node file 2 is also 1. Data content of the node is determined by using a storage location pointed to in the inode of the node. Therefore, when the different node names point to a same inode, the different node names also point to the same data content. In this case, both the file 1 and the node file 2 may be referred to as hard link nodes.

The foregoing descriptions of the concepts may be used in the following embodiments.

With increase of a scale of a user service and raising of a requirement on the service, a plurality of file systems usually need to be deployed for a service application. These file systems are very likely to be heterogeneous. As a result, data stored in the heterogeneous file systems becomes isolated data islands. This brings great inconvenience to a user in data use and management.

For example, service data of the user is deployed in a data center in a form of an NFS-type file system in a place A, a computing device of the user is located in a place B, and the computing device does not support reading metadata of the NFS-type file system. In this case, the user cannot access, by using the computing device in the area B, the file system stored in the area A. As a result, access of the user is blocked.

Even if the user can read the metadata of the NFS-type file system through data transmission (for example, through remote replication), because the metadata of the NFS file system is usually static, a change of the file system cannot be reflected. When the file system in the place A is changed, how to efficiently synchronize the change to the computing device in the place B also becomes a difficult problem.

In conclusion, in various heterogeneous file systems, the metadata is managed and controlled in different manners of the various heterogeneous file systems. As a result, the metadata of the file system cannot be efficiently shared and flowed.

In view of this, embodiments of this application provide a metadata structure, a structure of a metadata stream, a data processing method, and a related apparatus, to implement expressing metadata of heterogeneous file systems in a unified manner. In the unified expression manner, a difference between management and access control manners of the metadata between the heterogeneous file systems can be shielded, and a difference between devices that store the heterogeneous file systems can also be shielded. In other words, in the unified expression manner of metadata with a streaming structure in this application, the metadata between the heterogeneous file systems can be streamlined. Therefore, data in the heterogeneous file systems is no longer isolated data islands. This greatly improves convenience of data use and management for a user. In addition, a manner of uniformly expressing metadata of a file in this application is a streaming structure. Therefore, features of "read-only", "append-only", and "orderliness" of the streaming structure can reflect various change operations in the file system, that is, the expression manner of the metadata with the streaming structure in this application can dynamically reflect the change of the file system.

The following first describes a metadata format provided in embodiments of this application.

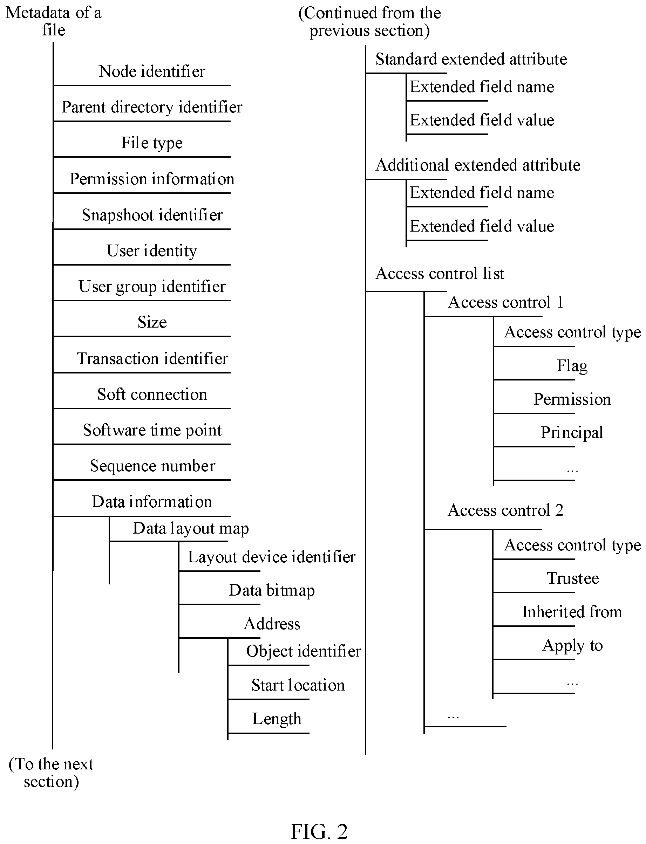

FIG. 2 is a diagram of a metadata structure according to an embodiment of this application. Metadata includes an identifier of a node, an identifier of a parent node of the node, and an attribute of the node.

The identifier of the node is an identifier used to distinguish different nodes. For example, the identifier of the node includes but is not limited to an ID of the node, a number of the node, and a location of a data block in which data of the node is stored.

In some possible scenarios, the node is in a one-to-one correspondence with an inode. The identifier of the node may be an identifier of the inode of the node, which is also referred to as an inode number. In this specification, the inode is directly used to represent the inode number. As shown in FIG. 1, an identifier of a node in a root directory is 0. An identifier of a node is 1 for a file whose file name is "Apple". An identifier of a node is 60 for a file whose file name is "Photo 1". Identifiers of other nodes are deduced by analogy, and are not described one by one herein again.

The identifier of the parent node of the node may be used to uniquely determine the parent node of the node. The node and the parent node of the node may be determined by using the identifier of the node and the identifier of the parent node, to determine a hierarchy between the plurality of nodes.

In some possible solutions, the identifier of the node is the inode corresponding to the node. Therefore, the identifier of the parent node of the node is an inode corresponding to the parent node of the node, and is represented as a pinode in some embodiments.

For example, a value of a pinode field may indicate the identifier of the parent node of the node. As shown in FIG. 1, an identifier of a parent node of the node 60 (the node whose identifier is 60) is 1, which may be represented as follows: A value of a pinode field of the node 60 is 1.

Certainly, in some scenarios (for example, a scenario of a hard link), the value of the pinode may have another design (described below).

The attribute of the node includes the information for describing the node. For example, the attribute of the node includes one or more of the following information: a name (name), a type (type), a mode (mode), a snapshot identifier (snapid), a user identifier (uid), a user group identifier (gid), a size (size), a change operation (action), a transaction identifier (tid), a soft link (linkto), a creation time point (ctime), a modification time point (mtime), a last access time point (access time, atime), a sequence number (sn), data information (datainfo), a standard extended attributes, an additional extended attribute, and an access control list (acl). The following describes some of the information by using examples.

The type indicates a type of the node. For example, the type of the node is one or more of a file, a directory, and a hard link. The file is a node that has specific data content, for example, a text document, a picture, or a program. The file usually has a file name extension, which indicates a file format (for example, a picture file is often saved in a JPEG format and a file name extension is .jpg). The directory may be understood as a folder in some scenarios, and is a data structure used to assist in managing the file. In some scenarios, each directory corresponds to one piece of disk space.

The type of the node may be indicated by using a value of a field. For example, when a value of a type field is FILE, it indicates that the node is a file. When a value of a type field is FOLDER, it indicates a directory. For another example, when a value of a type field is 0, it indicates that the node is a file. When a value of a type field is 1, it indicates a directory. When a value of a type field is 2, it indicates a hard link.

The mode indicates permission information of the file, and is also referred to as a permission bit. A value of the mode is usually related to read permission, write permission, or sharing permission of the node.

The snapid indicates a snapshot identifier of a file system. The uid indicates an id of a node owner. The gid indicates an id of a group to which the node belongs. The size indicates a size of the node, for example, is a quantity of bits or a quantity of bytes.

The change operation (action) indicates a type of a change operation on the node, and may indicate one or more of the following types: addition (create), update (update), modification (modify), deletion (delete), and the like. The change operation may record which change is performed on the node. In this way, the metadata may reflect a dynamic change of the node. This meets a requirement of a user for metadata dynamically changing, and helps implement sharing and flow of the metadata, and improve quality of service of the file system.

For example, a device A may share the metadata of the file system with a device B, to present a view of the file system on the device B. When the device A changes the node in the file system, a newly added metadata record of the node in the metadata stream may include a type of a change operation of the node. The newly added metadata record may be shared with the device B, and update on the view of the file system is triggered on the device B. In this way, a user of the device B or a service application on the device B can view a more accurate view (which can reflect changed content of the file system) of the file system.

It can be learned that the change operation field may be used to record information related to a file change. This not only improves accuracy of the metadata, but also helps implement sharing and flow of metadata, and further helps implement update on the view of the shared file system on a plurality of devices.

The transaction identifier (tid) indicates several transactions performed in the file system. The several transactions are related to the node in the file system, and include but are not limited to transactions such as node movement, batch node creation, batch node deletion, batch node name modification, or the like Moving the file is used as an example. The transaction includes two operations: deleting the file from a source directory and creating the file in a new directory. The two operations are all successfully performed or all fail to be performed, and are indivisible units.

The transaction identifier can be used to associate a plurality of pieces of metadata with a specific transaction. When the transaction needs to be rolled back, changes of the metadata associated with the transaction can be all canceled. In conclusion, the transaction identifier can be used to implement association between the plurality of pieces of metadata, so that the metadata has a capability of returning an invalid transaction. This helps ensure consistency of the file system in a process of sharing and flowing the metadata.

The sequence number (serial number, sn) indicates a sequence number of the metadata, and an optional value is a sequence number of a message carrying the metadata.

The sequence number can be used to help implement sorting and checking for missing metadata. This helps implement sharing and flow of the metadata. In some scenarios, a sequence number field can be used to support CDC messages, order modification, and data integrity check and recovery of the data.

The data information (datainfo) indicates storage layout information of the node, and helps obtain the data. For example, the data of the node may be distributed to a plurality of storage devices, and/or support a plurality of storage layout formats. In this case, a device that needs to obtain the data obtains, based on the storage layout information of the node, data content of the node from a storage device that stores the data.

Optionally, the data information may include the storage layout information (device data map). The storage layout information includes an ID (device ID), a data bitmap (for example, a block bitmap), and an address (address) of the device that stores the data of the node.

Further, optionally, the address includes an object identifier (object id), a start position (offset) of the data, a length (length) of data, and the like.

The standard extended attribute (represented as xattr in some embodiments) includes one or more attributes. In some possible designs, the standard extended attribute includes an extended attribute predefined in a file access protocol. It should be understood that the standard extended attribute may be used to be compatible with an extended attribute defined in metadata of an existing file system. For example, if some extended attributes are defined in an NFS, the standard extended attribute may be compatible with the extended attribute defined in the NFS.

An additional extended attribute (represented as a tag in some embodiments) includes one or more attributes. In some possible designs, the additional extended attribute includes one or more extended attributes defined by a user based on a requirement. For example, in addition to the extended attribute defined in the existing file system, one or more extended attributes are additionally defined, to improve applicability and extendability of the metadata. Optionally, a format of the additional extended attribute is a key value (Key-Value, KV) array. Optionally, a length of the KV array is length-variable, to support attribute extension.

Extended attributes such as the standard extended attribute and the additional extended attribute are used to not only meet an extendability requirement of the user on the metadata, but also control a hierarchy of the metadata. This helps manage the metadata.

The access control list (access control list, ACL) is used to record access control permission of the node. Optionally, the access control list may include one or more access control items, for example, access control 1 and access control 2. The access control item may include one or more of information such as an access control type (type), a flag (flag), permission (permission), a principal (principal), a trustee (trustee), inherited from (inherited_from), and apply to (apply_to).

The foregoing provides example descriptions of some data in the metadata. It should be understood that the foregoing descriptions are example descriptions for ease of understanding, and should not be understood as a limitation on a metadata format. In some scenarios, for meanings, usage manners, and a hierarchical relationship of and between some attributes, refer to descriptions in the conventional technology.

For example, a data type of the foregoing attribute may be an integer (int), a floating point (float), an array (byte_array), or a group (group).

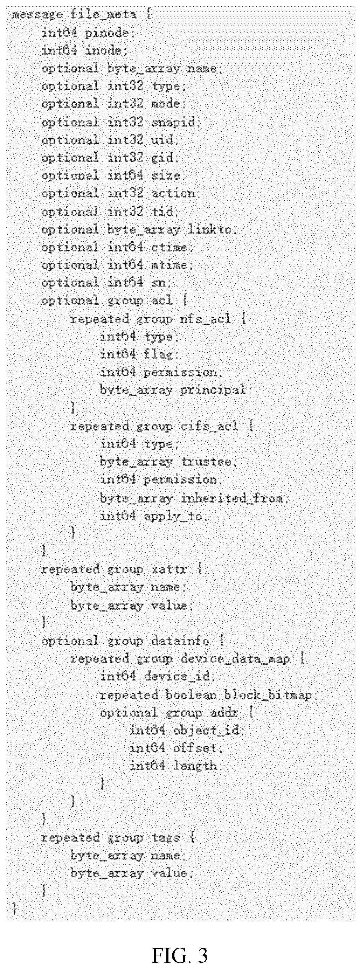

The foregoing attribute may be stored or transmitted in a form of a field. For ease of understanding, FIG. 3 is a diagram of a metadata format according to an embodiment of this application.

Metadata is referred to as file metadata information (massage file_meta), and includes information about a field, for example, whether the field is mandatory (an identifier before an optional field is optional, that is, optional), a data type of the field, and a length of the field. As shown in FIG. 3, a character like "int64 pinode" indicates that a value of the field is an integer of 64 bits (or a maximum of 64 bits) and a field name is a "pinode". For another example, a character like "optional int32 type" indicates that the field is an optional field, a value of the field is an integer of 32 bits (or a maximum of 32 bits), and a field name is a type. Other cases are deduced by analogy, and are not illustrated one by one herein again.

It should be understood that, in some embodiments of this application, the inode field and the pinode field are used as examples to respectively represent the identifier of the node and the identifier of the parent node of the node, and this does not mean that the identifier of the node can be represented only by using the inode. In some scenarios, the identifier of the node and the identifier of the parent node of the node may alternatively be represented in other manners. In addition, the field name described in this application is an example name provided for ease of understanding, and is not used as a limitation on an attribute of the file. A name of a field for describing the attribute of the file may have another design different from those in FIG. 1 and FIG. 3. This is not strictly limited in this application.

Information about the node is described by using the metadata. The file system is changed at any time. In this case, the metadata corresponding to the node in the file system is also changed accordingly. This helps accurately describe the node. The change of the file system includes but is not limited to node addition, node deletion, node update (or referred to as modification), node movement, or the like.

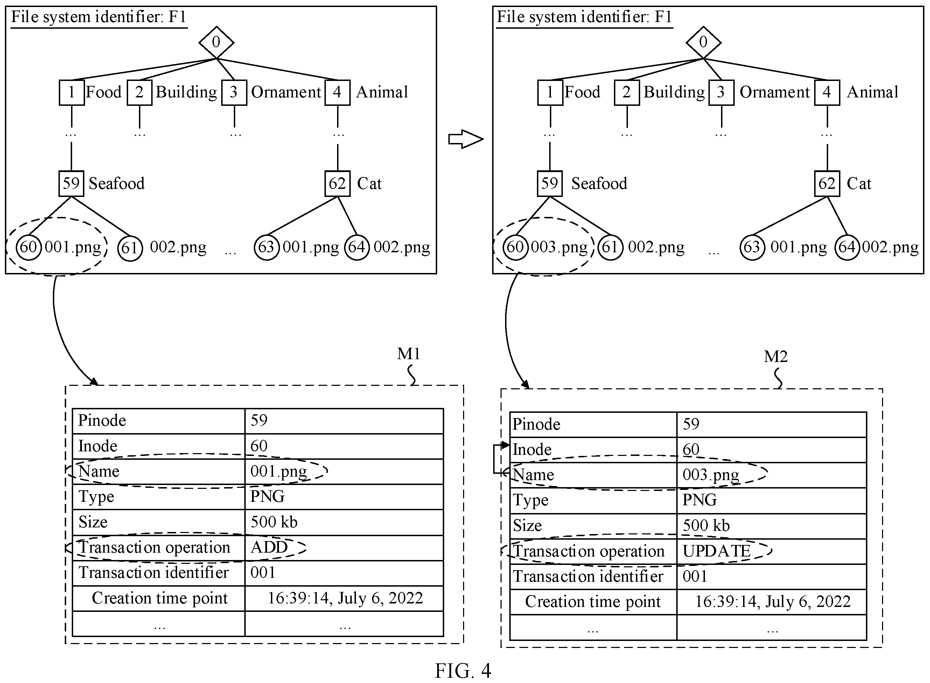

The following uses the file as an example to describe the change of the node. The descriptions are also applicable to the directory. FIG. 4 is a diagram of a scenario of a file change and a metadata change according to an embodiment of this application. As shown in FIG. 4, at a moment, a file whose name is "001.png" is created in a file system (whose identifier is F1), and the file has corresponding metadata (referred to as metadata M1 for ease of differentiation). As shown in FIG. 4, for the file, an identifier of an inode is 60, and an identifier of a pinode is 59. Further, the metadata M1 includes an attribute of the file, to describe the name, a type, a size, and the like of the file.

Optionally, the metadata M1 includes a change operation field, and a value of the change operation field indicates a new addition (create) operation.

After a change operation is performed on the file, the metadata of the file should also be changed accordingly. For example, the file whose name is "001.png" is renamed "003.png". In this case, a name in the metadata M1 is also correspondingly changed, and new metadata M2 is obtained. As shown in FIG. 4, in the metadata M2, the name of the file is already changed. Further, the metadata M2 includes a change operation field. A value of the change operation field indicates a modification (modify) operation or an update (update) operation.

It can be learned that the change of the node may be represented by the change of the metadata. Metadata of a node in a file system in a plurality of periods needs to be stored in a unified manner by using a data structure.

An embodiment of this application provides a metadata stream. The metadata stream is a streaming structure including a plurality of records, may record a metadata change of a file system, and may reflect a change of data in the file system. In an expression manner of the metadata with the streaming structure, flow and sharing of the metadata can be implemented.

In the metadata stream, the record may be considered as a piece of metadata of a file in a period, and is also referred to as a metadata record. Information included in the record is the same as an attribute of metadata of a node, or some attributes are the same (for example, in some scenarios, a record is obtained after metadata is processed, and an attribute name or an attribute level of the metadata may be changed or some attributes may be added or deleted in a processing process).

The streaming structure is a data structure that represents data in a form of a stream. The streaming structure has the following features: read-only, append-only, and orderliness. "Read-only" means that a value of the record in the streaming structure can only be read but cannot be modified. "Append-only" indicates that only a new record can be appended to the streaming structure but an existing record cannot be deleted, but a plurality of records belonging to a same node may be merged into one record. "Orderliness" means that the records in the streaming structure have a logical sequence, and when the new record needs to be added, the new record is appended at an end of the streaming structure. Further, when a plurality of new records need to be appended, the plurality of records are sorted based on change time points (for example, a sequence number in each record is used to reflect an occurrence sequence of the records).

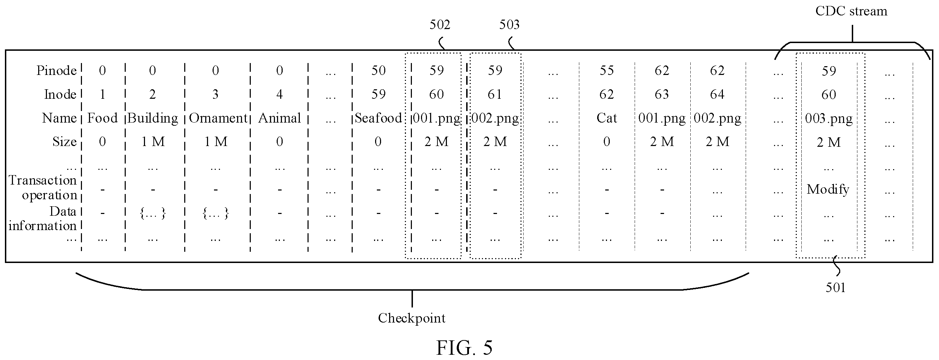

FIG. 5 is a diagram of a metadata stream according to an embodiment of this application. The metadata stream is metadata of a first file system. It should be understood that the first file system in embodiments of this application is a specific file system (or a group of specific file systems), and is not intended to limit a type of the file system. For example, the first file system is a file system whose identifier is F1. In addition, a group of file systems may be understood as a file system set including a plurality of file systems. For example, in some technologies, a plurality of cross-region file systems are connected to form a global file system by using a proprietary protocol, to meet a requirement of a user for accessing data at any location. The global file system may be considered as a file system set, that is, a group of file systems. Certainly, the file system set still has an identifier corresponding to the file system set, to index the file system set.

The metadata stream includes a plurality of records, each record corresponds to one node, and the node belongs to the first file system. The record includes an identifier of the node and an identifier of a parent node of the node, and optionally includes a name (name), a type (type), a permission (mode), a snapshot identifier (snapid), a user identifier (uid), a user group identifier (gid), a size (size), a change operation (action), a transaction identifier (tid), a soft link (linkto), a creation time point (ctime), a modification time point (mtime), an access time point (atime), a sequence number (sn), data information (datainfo), an access control list (acl), a standard extended attribute (attr), an extended attribute (tag), and the like (some fields are shown in FIG. 5).

Optionally, some fields recorded in the metadata stream are optional fields. To be specific, values corresponding to some fields in the record may be empty, may be default values, or referring to an attribute of another record, or the like.

In a possible design, the metadata stream is shared by a plurality of devices. When a device appends a new record to an end of the metadata stream, the plurality of devices that share the metadata stream may read the newly added record from the metadata stream, to obtain a change in the file system, and implement synchronization of the change of the file system. Records can be continuously added to the metadata stream. Therefore, the metadata stream can be used to implement flow and sharing of the metadata. This helps synchronization of a view of the file system on the plurality of devices.

The foregoing describes a basic structure of the metadata stream, and the following describes some possible designs of the metadata stream. It should be understood that the following plurality of designs may be separately implemented, or may be implemented in combination. A case in which the plurality of designs are implemented in combination is not described in embodiments of this application.

### (Design 1)

In a possible design, the identifier (for example, represented as a pinode) of the parent node of the node and the identifier (for example, represented as an inode) of the node are used as an index of a group of records. The group of records are records of a same node in a same parent directory. In some scenarios, the index of the record is also referred to as a key of the record or a unique primary key (unique key) of the record.

For example, if a pinode of a record S1 is the same as a pinode of a record S2, and an inode of the record S1 is also the same as an inode of the record S2, the record S1 and the record S2 belong to a same group of records.

A name of the node name may be changed, and the identifier of the node is usually fixed. Therefore, validity of the index can be prolonged by using the identifier of the node as a part of the index. In addition, the node may be moved in a plurality of directories, a node may be located and a hierarchy of a plurality of nodes may be determined by using the identifier of the parent node of the node and a directory identifier of the node. In addition, in a scenario in which the node is moved, a change of the parent node of the node can be reflected based on the index. Correspondingly, the identifier of the parent node of the node and the identifier of the node are used as the index. This can conveniently find a record corresponding to a specified node, and is applicable to a scenario in which the name of the node is changed. In a scenario in which a life cycle of the node is traced vertically, search efficiency and result accuracy can be improved, and stability and high availability of the metadata can be improved.

### (Design 2)

In another possible design, the metadata stream of the file system may be provided for the plurality of devices (shared between the plurality of devices). When the new record is appended to the metadata stream, the plurality of devices sharing the metadata stream may obtain the newly added record in the metadata stream, to update related information of the file system based on the newly added record, for example, a hierarchy of the file system, the view of the file system, or the attribute of the node in the file system.

For example, the file system is deployed on a device A, and the metadata stream of the file system may be shared and synchronized between the device A, a device B, and a device C. In this way, the device A, the device B, and the device C may construct a file view including a hierarchy between nodes of the file system.

When the device B performs a change operation on a node (file or directory) in the file system, the device B may append a new record to the metadata stream. The device A, the device B, and the device C may obtain the appended record from the metadata stream, to update the related information of the file system (update a hierarchy and the like of the file system). This implements dynamic synchronization of the metadata of the file system between the plurality of devices.

In addition, in this design, the plurality of devices sharing the metadata stream do not need to sense each other. For example, after the device A appends a new record to the metadata stream, the device B and the device C can obtain the new record by using the shared metadata stream. This helps implement loose coupling collaboration of a multi-device system (a system including the plurality of devices), and improve flexibility and scalability of the system.

### (Design 3)

In the foregoing implementation, the change of the node can be indicated by using the value of the action field in the record. Certainly, in a specific implementation process, the change of the node may alternatively be indicated in another manner.

In still another possible design, the change of the node is indicated by using one or more records in the metadata stream. For ease of understanding, the following provides example descriptions of possible implementations of indicating the change operation.

Implementation 1: For a record, if an index of the record does not exist in a previous metadata stream (a metadata stream existing before the record), it indicates to create (create or newly add) a node.

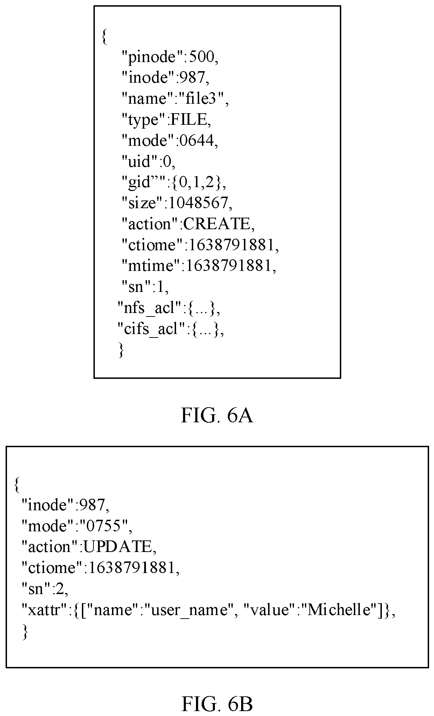

For example, FIG. 6A is a diagram of a record according to an embodiment of this application. The record is appended to the metadata stream shown in FIG. 5. A unique key of the record is "pinode: 500, inode: 987". For descriptions of other related information, refer to the embodiment shown in FIG. 2. The unique key does not exist in the metadata stream shown in FIG. 5, and therefore it indicates that a node corresponding to the record is a newly created node.

Implementation 2: For a record, if an index of the record exists in a previous metadata stream, it indicates to update (update) a node, or indicates to modify (modify) a node.

For example, a unique key of a record in an area 501 shown in FIG. 5 is that "a pinode is 59, and an inode is 60". The unique key already exists in a previous metadata stream (as shown in an area 403), it indicates modification of the node. With reference to another attribute in the record, it may be determined that a name of a node 60 is changed from 001.png to 003.png.

FIG. 6B is a diagram of another record according to an embodiment of this application. For example, if a change operation is modifying permission of a node 987 to 0755, and setting an extended attribute user name (user_name), where a value of the extended attribute user name is "Michelle", the appended record is shown in FIG. 6B.

In a possible implementation, when a node is modified, the record includes an inode of the node and an updated attribute, and optionally includes indication information and/or a sequence number of an operation type. For example, the record shown in FIG. 5 includes a permission field and an extended attribute field. An action field is UPDATE (or MODIFY), and an extended attribute field is {["name":"user_name","value":"Michelle"]}.

Optionally, when the node is modified, the record may not include an attribute that is not updated. Certainly, in a specific implementation process, the record may alternatively include a pinode, an attribute that is not updated, and the like.

Implementation 3: For two records, if the two records have a same inode but different pinodes, and one record includes a delete flag, it indicates movement of the node.

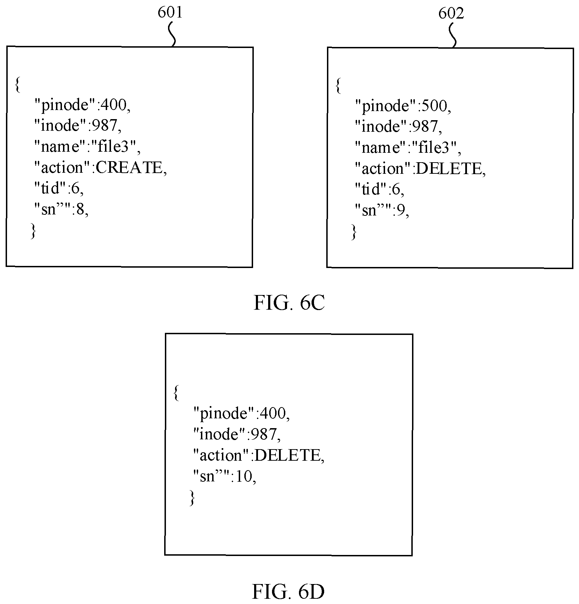

FIG. 6C is a diagram of other two records according to an embodiment of this application. For example, if a node 987 is moved from a node 500 to a node 400, an appended record is shown in FIG. 6C. A record 601 indicates that a node is newly added to the node 400. The record 601 includes an inode and a pinode of the node 987, and optionally includes a node name, information indicating an update operation, a transaction identifier, a sequence number, and the like. Similarly, a record 602 indicates that the node 987 is deleted from the node 500. The record 602 includes the inode, the pinode, and a delete flag of the node 987, and optionally includes a node name, a delete flag, a transaction identifier, a sequence number, or the like.

It should be understood that node movement is a transaction. Therefore, the record appended when the transaction is performed has a same transaction identifier. To be specific, the transaction identifier in the record 601 is the same as the transaction identifier in the record 602.

Implementation 4: For a record, if the record includes a delete flag, it indicates that a node corresponding to the record is deleted. For example, the delete flag may be indicated by an update operation (action) field. When the action field is deleted, it indicates that the node is to be deleted.

FIG. 6D is a diagram of still another record according to an embodiment of this application. For example, if a change operation is to delete a node 987, an appended record is shown in FIG. 6D. The record shown in FIG. 6D includes an inode and a delete flag of the node 987, and optionally includes a pinode, an sn, an attribute of another node, and the like.

Optionally, when the node includes a hard link node, the record that indicates to delete the node includes the pinode of the node.

It should be understood that FIG. 6A to FIG. 6D show metadata in a JSON format enumerated for ease of understanding, and are not used as a limitation on a format of the record in the metadata stream.

Implementation 5: For a record, if a value of an inode and a value of a pinode of the record are the same, it indicates that a hard link (described below) is created on the node.

The foregoing several cases are several possible cases enumerate for ease of understanding a meaning of the record in the metadata stream. In a specific implementation process, more or fewer cases may be included, or some changes may be represented in other manners.

### (Design 4)

In a possible implementation, the metadata stream includes a checkpoint (checkpoint) and a CDC stream.

The checkpoint may also be referred to as basic static metadata. In the checkpoint, one node corresponds to only one record. To be specific, an index of each record in the checkpoint is unique.

The CDC stream is also referred to as a dynamic file system operation data, and is one piece (or more pieces) of data with a streaming structure obtained by appending a record based on the checkpoint. To be specific, an appending time point of the record in the CDC stream is usually after a checkpoint stream.

In addition, in the CDC stream, an index of the record may not be unique, and one node may correspond to a plurality of records. To be specific, two or more records may have a same index. This is because, when each change occurs in the file system, one or more records are appended to the CDC stream, one node in the file system may be changed a plurality of times, and accordingly, a plurality of records corresponding to the node are appended to the CDC stream.

For example, a checkpoint and a CDC stream are shown in a metadata stream in FIG. 5. Records shown in an area 502 and an area 503 are included in the checkpoint. The record in the area 501 is a record appended after the checkpoint and belongs to the CDC stream.

In a possible solution, the checkpoint is a bounded stream, and the CDC stream is a boundless stream. In other words, a quantity of records in the checkpoint is limited (related to a quantity of nodes, whether the node has a hard link, and the like), but a quantity of records in the CDC stream may not be limited. For example, in some scenarios, the quantity of records in the CDC stream is the same as a quantity of nodes in the file system existing when the checkpoint is generated. However, because one node may be updated for a plurality of times, a quantity of records corresponding to the node in the CDC stream is boundless.

### (Design 5)

In a possible implementation, the metadata stream may be merged. A main body that performs a merging operation may be one of the plurality of devices sharing the metadata stream, or may be a device on which the first file system is deployed, a device providing a metadata service, or a specified management device for the metadata stream.

Specifically, the device performs the merging operation on the metadata stream, to merge, into one record, a plurality of records corresponding to a same node in a first metadata stream.

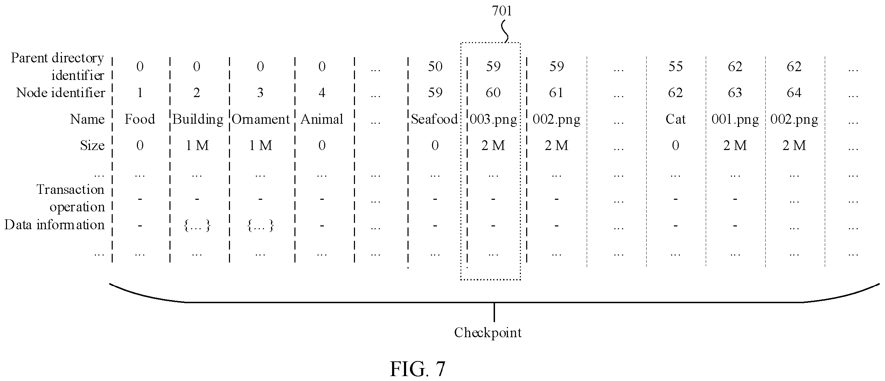

FIG. 7 is a diagram of another metadata stream according to an embodiment of this application. FIG. 7 is a diagram of a new checkpoint, which is obtained by the device by performing a merging operation on a metadata stream shown in FIG. 5 and merging a record in a CDC stream into a checkpoint. In FIG. 5, the checkpoint includes a record corresponding to a node 60, and the CDC stream also includes a record of the node 60. After merging, a plurality of records corresponding to the node 60 are merged into one record, and an attribute of the record is a latest attribute, as shown in an area 701.

In this implementation, the CDC stream in the metadata stream may be merged, to obtain a simplified metadata stream. This reduces a quantity of records in the metadata stream, saves storage space, and can also improve efficiency of reading the metadata stream and processing the stream by a subsequent access device, thereby improving user experience.

Optionally, the metadata stream is merged in different periods to obtain checkpoints of the file system in the different periods. For example, a plurality of checkpoints may be distinguished by using identifiers (for example, numbers, IDs, or names), for example, a checkpoint 0 and a checkpoint 1.

When the new checkpoint is generated, an old checkpoint can also be retained. The plurality of checkpoints in the different periods can be used to support rollback or version backtracking of the file system, to improve a failure recovery capability of the file system, and improve robustness of the file system.

### (Design 6)

In a possible manner, a checkpoint is stored in a format of a compressed file. For example, a file format of the file storing the checkpoint includes but is not limited to a column storage format (for example, parquet or Carbondata) or a row storage format (for example, Avro).

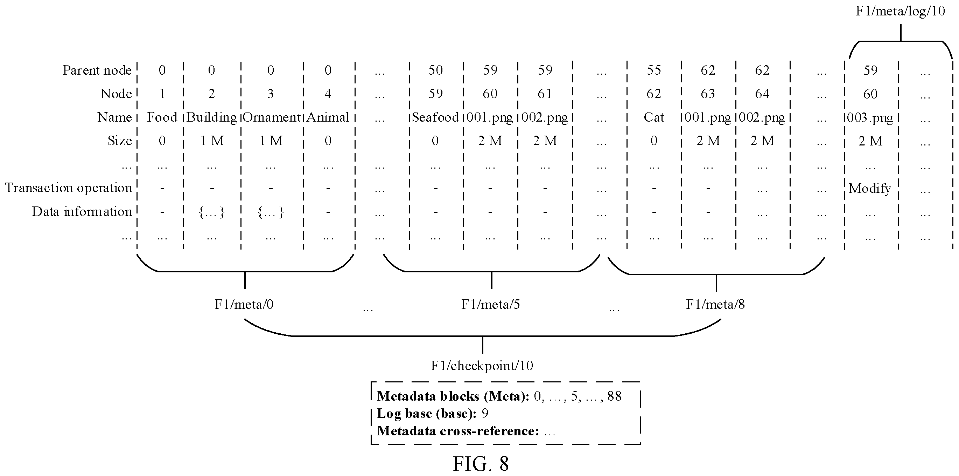

FIG. 8 is a diagram of still another metadata stream according to an embodiment of this application. Optionally, during storage, a checkpoint may be divided into a plurality of data blocks for storage. To be specific, each data block is compressed into one compressed file (or a group of compressed files).

As shown in FIG. 8, a checkpoint (a number of the checkpoint is 10) corresponding to a file system F1 includes 89 metadata blocks (namely, metas), which are respectively numbered from 0 to 88. "F1/Meta/0" indicates a record stored in meta whose number is 0, and F1 is an identifier of the file system. "F1/Meta/5" indicates a record stored in a meta whose number is 5. "F1/Meta/88" indicates a record stored in a meta whose number is 88. For other records that are not shown, refer to the foregoing descriptions. The other records are not described one by one herein again.

Optionally, division of the metas may be related to one or more of a hierarchical relationship and a branch relationship between the nodes, a quantity of records, a sequence of the records, a data size of the record, and the like. For example, during division of the metas, a size (or a quantity of bytes) of the meta is controlled to be less than or be less than or equal to a first threshold. For example, the first threshold is 10 M or 20 M. Optionally, the first threshold may be predefined or preconfigured by a user, a vendor, a related organization (for example, a standard organization), a management device, or the like.

In a possible implementation, a CDC stream may be stored in a form of a message queue, to improve real-time performance of the CDC stream. For example, the message queue includes a plurality of messages, and each message includes one record. The device sharing the metadata stream may obtain the records in the CDC stream by reading the messages in the message queue.

Optionally, the record in the CDC stream may be stored in a log form. For example, the CDC stream is divided into several logs.

Further, there may be a plurality of logs (the plurality of logs may exist at the same time, or may exist in different periods). The plurality of logs have a time sequence, and the plurality of logs may be distinguished by using identifiers (for example, IDs and numbers), for example, a log whose number is 10 in a table "F1/meta/log/10" shown in FIG. 8.

In a possible solution, the performing the merging operation on the data stream may be specifically: merging the records in the log into the meta.

Optionally, related information of the metadata stream includes log base (Log base) information. An identifier of a log merged by a current checkpoint may be recorded by using a log base. In this way, when reading the CDC stream, the device sharing the data stream may read a log after the log base. This avoids reading repeated data, and improves efficiency and accuracy of a result of reading the metadata stream.

The foregoing describes the structure of the metadata and the structure of the metadata stream in embodiments of this application. The following provides example descriptions of a system architecture in embodiments of this application.

It should be noted that the system architecture described in this application is intended to describe the technical solutions in this application more clearly, but constitutes no limitation on the technical solutions provided in this application. Persons of ordinary skill in the art may know that, with evolution of the system architecture and emergence of a new service scenario, the technical solutions provided in this application are also applied to a similar technical problem.

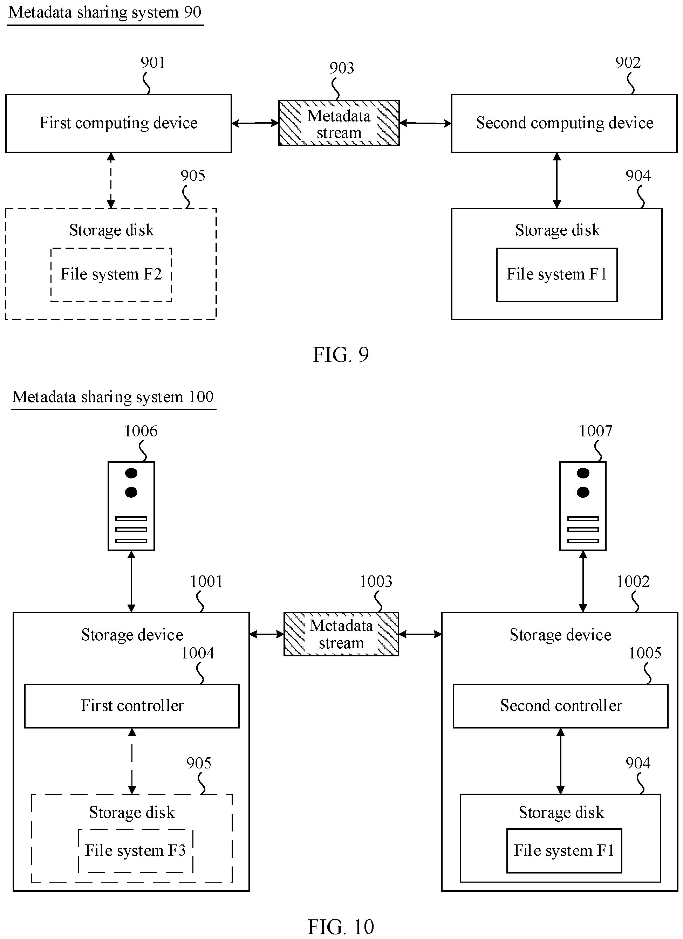

FIG. 9 is a diagram of an architecture of a metadata sharing system according to an embodiment of this application. The metadata sharing system 90 includes a first computing device 901 and a second computing device 902. Metadata sharing between devices in the metadata sharing system 90 is implemented by using a metadata stream 903.

The metadata stream 903 is a metadata stream of a first file system, and the first file system is a specific file system (or a group of specific file systems). For example, there is a correspondence between the metadata stream 903 and an identifier of the first file system. A metadata shown in FIG. 5 is a metadata stream of a file system whose identifier is F1. The metadata stream 903 is a streaming structure and includes a plurality of records. Each record includes an inode and a pinode of a node and an attribute of the node. For related descriptions, refer to the foregoing descriptions.

The first computing device 901 has a data processing capability and a communication capability, and can complete one or more of the following operations: constructing a first metadata stream, obtaining the first metadata stream, appending a new record to the metadata stream, reading a newly appended record in the metadata stream, and the like.

It should be understood that a computing device (for example, the first computing device 901 or the second computing device 902) in embodiments of this application may include hardware, a software module, an apparatus combining software and hardware, or the like. Optionally, the computing device may be implemented by a hardware entity, or may be implemented by using a virtualization technology. For example, the computing device may be a controller, a processor, a server, a virtual machine, a cloud, or the like. The controller includes but is not limited to a storage controller (for example, an internal storage controller, a hard disk controller, an integrated drive, an electronic controller, or a disk array controller), a combined logic controller, a hardwired controller, and the like. The processor includes but is not limited to a central processing unit, a picture processor, an artificial intelligence processor, a microprocessor, a programmable logic gate array, or the like. In addition, in some scenarios, because the controller also has a computing capability and/or can execute an instruction, the controller may also be considered as a processor. The server includes but is not limited to a general-purpose computer, a storage server, a cloud server, a blade server, or the like. When a function of the computing device is implemented by the server, the computing device may include one server or more servers (for example, a server cluster). The virtual machine is a virtualized computing module. The cloud is a software platform that uses an application virtualization technology, and can enable one or more pieces of software and applications to be developed and run in an independent virtualized environment. Optionally, the cloud may be deployed on a public cloud, a private cloud, a hybrid cloud, or the like.

The second computing device 902 has a data processing capability and a communication capability, and can complete one or more of the following operations: constructing the first metadata stream, obtaining the first metadata stream, appending a new record to the metadata stream, reading the newly appended record in the metadata stream, and the like.

In an embodiment of this application, metadata of the first file system is shared and flowed between a plurality of computing devices in a unified expression manner (a metadata stream 903). In this way, the plurality of computing devices all can conveniently obtain the metadata of the first file system and determine a hierarchy of the first file system based on the metadata stream 903. This implements interworking and sharing of metadata of a file system between the plurality of devices, and greatly improves convenience of data use and management for a user.

For example, the metadata stream 903 may be constructed by the second computing device 902. The first computing device 901 may obtain the metadata stream 903, and determine the hierarchy of the first file system based on the metadata stream 903, and may construct a file view of the first file system based on the hierarchy. In other words, the metadata sharing system implements sharing and flow of the metadata of the first file system between the first computing device 901 and the second computing device 902. In this way, the user can determine the hierarchy of the first file system by using either of the first computing device 901 and the second computing device 902 (and can further determine, based on the hierarchy of the first file system, a file view that including the hierarchy of the first file system). This improves user experience.

Optionally, the metadata sharing system 90 may further include a storage disk 904. Data of the first file system may be stored in the storage disk 904. There is a communication connection between the second computing device 902 and the storage disk 904.

The second computing device 902 and the storage disk 904 may be independent or integrated.

In a possible implementation, the second computing device 902 and the storage disk 904 may be included in a same device, for example, a storage device or a storage system. For example, the second computing device 902 and the storage disk 904 are included the storage device. The second computing device 902 may be a controller in the storage device, and the storage disk 904 may be a storage medium in the storage device. The second computing device 902 and the storage disk 904 may implement the communication connection through a bus or a network. For example, the network is a wired network, a wireless network, or a combination of a wired network and a wireless network. For example, the second computing device 902 and the storage disk 904 are connected through a network cable, or are connected by using a switch. In another possible manner, the second computing device 902 and the storage disk 904 belong to different storage devices (or storage systems). For example, the storage disk 904 is included in a storage device, and the second computing device 902 is an independent computing device outside the storage device. The storage disk 904 and the second computing device 902 are connected.

For example, the storage disk 904 may be a hard disk. The second computing device 902 is a hard disk controller, and the hard disk controller is configured to manage the foregoing hard disk.

Optionally, the metadata sharing system 90 further includes a storage disk 905. The first computing device 901 is connected to the storage disk 905. Similarly, the first computing device 901 and the storage disk 905 may be independent or integrated. For related descriptions, refer to the foregoing descriptions of the first computing device 901 and the storage disk 905.

Optionally, the first computing device 901 and the storage disk 905 belong to a second storage device. The first computing device 901 and the storage disk 905 belong to a first storage device. The first storage device and the second storage device are heterogeneous storage devices. For example, the first storage device belongs to a distributed storage system provided by a vendor A, and the second storage device belongs to an object storage system provided by the vendor A. For another example, the first storage device belongs to a distributed storage system provided by a vendor A, and the second storage device belongs to a distributed storage system provided by a vendor B.

In a possible implementation, the storage disk 905 stores data of the file system (referred to as a third file system for ease of differentiation, for example, the third file system is a file system whose identifier is F3).

Access (and/or control) manners of the third file system and the first file system are different, and/or the third file system and the first file system have different metadata formats.

In a possible implementation, the first computing device 901 and the second computing device 902 may be located in different data centers. For example, the first computing device is located in a first data center, and the second computing device is located in a second data center. In this implementation, sharing and flow of the metadata of the first file system between different data centers are implemented by using the metadata stream. To be specific, a cross-data center (cross-domain) user can know the hierarchy of the first file system. Further, the cross-data center user may construct, based on the metadata stream (and/or the hierarchy of the first file system), the file view including the hierarchy of the first file system.

Optionally, when the second computing device 902 is connected to the storage disk 904, the storage disk 904 and the second computing device 902 may be located in a same data center. For example, both the storage disk 904 and the second computing device 902 are located in the second data center.

Similarly, when the first computing device 901 is connected to the storage disk 905, the storage disk 905 and the first computing device 901 may be located in a same data center. For example, both the storage disk 905 and the first computing device 901 are located in the first data center.

In a possible implementation, the first computing device 901 and the second computing device 902 may be located in different regions. For example, the first computing device 901 is located in a city A, and the second computing device 902 is located in a city B. To be specific, in the foregoing implementation, a cross-domain user can determine the hierarchy of the first file system, and further, a cross-domain computing device can construct the file view including the hierarchy of the first file system.

In some possible scenarios, an external device may initiate an I/O request to a storage disk or a storage device (or a storage system) in which the storage disk is located, to access data (a data I/O request) of a file system in the storage disk or perform a change (a metadata I/O request) on a file system. The computing device may sense the I/O request initiated by the external device, and perform a related operation in response to the I/O request. The external device herein is a device outside the storage disk or a device outside the storage device in which the storage is located, for example, a host, a server, or a public cloud. This is not limited in this application. For ease of description, the following provides example descriptions by using an example in which the external device is the host.

FIG. 10 is a diagram of an architecture of another metadata sharing system according to an embodiment of this application. The metadata sharing system 100 includes a storage device 1001, a storage device 1002, a metadata stream 1003, and a host.

The storage device 1001 includes a first controller 1004 and a storage disk 905. The first controller 1004 is connected to the storage disk 905. For related descriptions of the first controller 1004, refer to the descriptions of the first computing device 901. For related descriptions of the storage disk 905, refer to the foregoing descriptions.

The storage device 1002 includes a second controller 1005 and a storage disk 904. The second controller 1005 is connected to the storage disk 904. For related descriptions of the second controller 1005, refer to the descriptions of the second computing device 902. For related descriptions of the storage disk 904, refer to the foregoing descriptions.

The metadata stream 1003 is a metadata stream of a first file system. For example, the first file system is a file system F1 and/or a file system F2. The storage device 1001 and the storage device 1002 may obtain the metadata stream 1003, determine a hierarchy of the first file system based on the metadata stream 1003, and further present a view of the first file system.

The host (which is a production host in this specification) is a user-oriented device or a device running a service application, and can initiate an I/O request. Optionally, the host may be connected to a storage device (including a storage disk) or a computing device (connected to a storage disk). In this way, a user or the service application may initiate an I/O request for data stored in the storage disk.

In a possible implementation, a host 1006 is connected to the storage device 1001. In this case, the host 1006 may initiate an I/O request to the storage device 1001. For example, the host 1006 may request to read data of the file system F1 and read data of the file system F3, request to perform a change on the file system F1, or request to perform a change on the file system F3.

It may be understood that the storage device 1001 and the storage device 1002 may implement sharing and flow of metadata of the file system F3 by using the metadata stream 1003, so that the storage device 1001 may determine a hierarchy of the file system F3 (and may further determine, based on the hierarchy of the file system F3, a file view including the hierarchy of the first file system). Therefore, the host 1006 may request to read the data of the file system F3 and/or request to perform the change on the file system F2.

Similarly, a host 1007 is connected to the storage device 1002. In this case, the host 1007 may initiate an I/O request to the storage device 1002. For example, the host 1007 may request to read the data of the file system F1 and read the data of the file system F2, request to perform a change on the file system F1, or request to perform a change on the file system F2.

In FIG. 10, a case in which the storage disk and the computing device are integrated are used for description. For a case in which the storage disk and the computing device are disposed independently, there may be another implementation in which the computing device obtains data access (various I/O requests) of the host to the storage disk. For example, the following enumerates examples of two possible implementations.

Implementation 1: The computing device can determine the hierarchy of the first file system, and the first file system is the file system F1 and/or the file system F3, and the like. The computing device is connected to the host. The I/O request of the host for the first file system first arrives at the computing device. Then, the computing device processes the I/O request.

FIG. 9 is used as an example. When the first computing device 901 receives the I/O request from the host, and the I/O request indicates to read data of a file in the file system F2, because the first computing device 901 is connected to the storage disk 905, the first computing device may read the data of the file from the storage disk 905, and feed back the data to the host.

FIG. 9 is still used as an example. When the first computing device 901 receives the I/O request from the host, and the I/O request indicates to add a node to the file system F1, the first computing device 901 may append a record to the metadata stream 903.

Implementation 2: The storage disk is included in the storage device, the computing device is a device independent of the storage device, and the computing device is connected to the storage device. In this case, the host is connected to the storage device. The I/O request of the host first arrives at the storage device. The computing device obtains the I/O request of the host from the storage device (for example, a controller of the storage device).

Optionally, the I/O request may be actively requested by the computing device from the storage device, or the storage device may actively feed back the I/O request to the computing device.

It should be understood that the foregoing two implementations may be further combined. In addition, in a specific implementation process, there may be another implementation in which the I/O request of the host is processed. Details are not described herein.

In a possible implementation, the file system F1 is accessed by the host according to a first access protocol. The file system F3 is accessed by the host according to a second access protocol. The first access protocol is different from the second access protocol.

The foregoing already describes the system architecture of the metadata sharing system. The following provides examples of several operating scenarios of a metadata sharing system for ease of understanding.

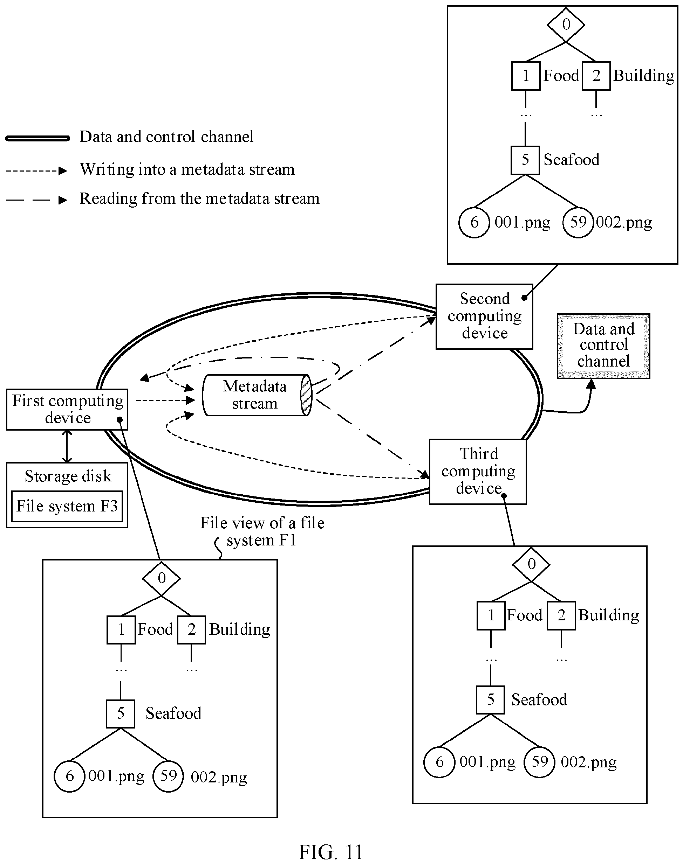

FIG. 11 is a diagram of an operating scenario of a metadata sharing system according to an embodiment of this application. As shown in the following figure, data of a file system F3 is stored in a storage disk connected to a first computing device. The first computing device (which may be considered as a producer) may share a metadata stream of the file system F3. A second computing device (which may be considered as a consumer) and a third computing device (which may be considered as a consumer) locally construct, based on the metadata stream, a file view that is the same as that of the first computing device.

Further, changes of the file system by the first computing device, the second computing device, and the third computing device may be written into the metadata stream in a form of a record. Correspondingly, the first computing device, the second computing device, and the third computing device may read the metadata stream to keep metadata of a plurality of parties synchronous, and obtain the change of the file system based on the metadata stream to update a view of the file system.

In some possible scenarios, corresponding permission is required to write the record into the metadata stream or read the record from the metadata stream.

In a possible implementation, the first computing device, the second computing device, and/or the third computing device may receive an I/O request of a host, and perform a related operation in response to the I/O request.

For example, the second computing device may receive an I/O request of the host for data content of a file in the file system F3, and the second computing device obtains the data content of the file from a storage disk that stores the data of the file system F3.

In a possible design, a data and control channel (as shown in FIG. 11) is established in the metadata sharing system, and is used to transmit one or more of data, a command, an instruction, a message, and the like. In this case, request and feedback of the data content of the file may be implemented through the data and control channel.

In FIG. 11, a case in which one device shares the metadata stream with a plurality of devices is described. The following describes a scenario in which a device receives a plurality of metadata streams.

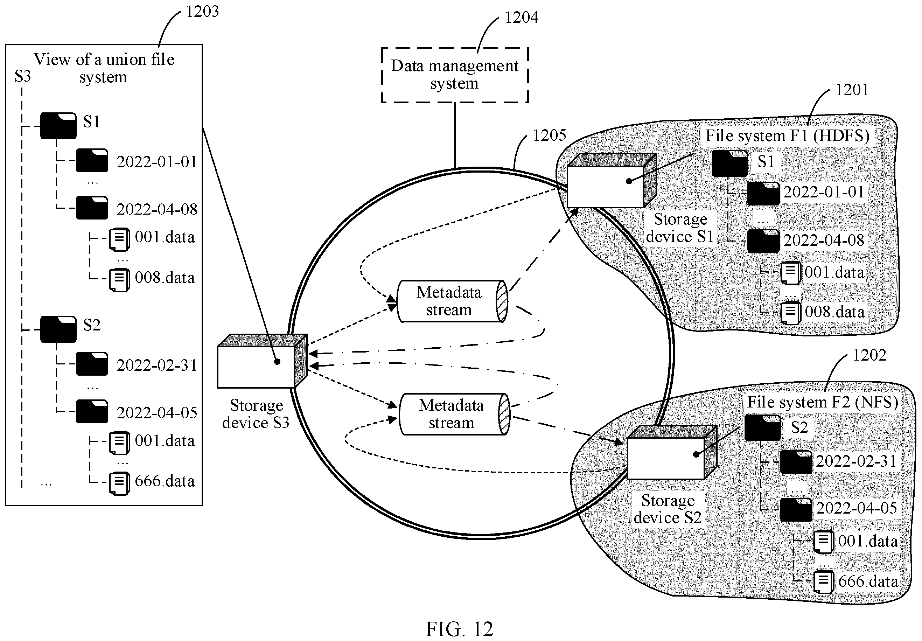

FIG. 12 is a diagram of an operating scenario of another possible metadata sharing system according to an embodiment of this application. The metadata sharing system includes a storage device S1, a storage device S2, and a storage device S3. Each of the storage device S1, the storage device S2, and the storage device S3 includes a controller and a storage disk. For related descriptions, refer to the foregoing descriptions. It should be understood that, in FIG. 12, an example in which a computing device (namely, the controller) and the storage disk are integrated into a storage device is used for description. This application is also applicable to a case in which the computing device and the storage disk are connected in another manner.

The storage device S1 stores data of a file system F1, and the storage device S2 stores data of a file system F2. Optionally, types of the file system F1 and the file system F2 may be different. In other words, the storage device S1 and the storage device S2 may be heterogeneous. For example, a file system in the storage device S1 is an HDFS, and a file system in the storage device S2 is an NFS.

In a possible implementation, the storage device S1 and the storage device S2 may share metadata streams of the file systems stored in the storage device S1 and the storage device S2. The storage device S3 may obtain, based on the metadata streams shared by the storage device S1 and the storage device S2, a view of a union file system (a file system obtained by uniting a plurality of file systems, also referred to as a global file system). The view of the union file system includes a view of the file system in the storage device S1 and a view of a file system in the storage device S2.

As shown in FIG. 12, the file system F1 exists in the storage device S1, and a view of the file system F1 is shown in an area 1201. A view of the file system F2 in the storage device S2 is shown in an area 1202. For example, in the view of the file system F1, a node name that is "S1" represents a root directory in the file system F1, and a node whose node name is "2022-01-01", a node whose node name is "2022-04-08", and the like are example nodes in the root directory. A node whose node name is "001.data", a node whose node name is "008.data", and the like are example nodes in the node whose node name is "2022-04-08". For the view of the file system F2, refer to the view of the file system F1.

The view of the union file system obtained by the storage device S3 is shown in area 1203, includes a hierarchy of the file system F1 and a hierarchy of the file system F2.

In a possible design, metadata streams of different file systems are disposed independently. As shown in FIG. 12, the storage device S1 shares the metadata stream of the file system F1, and the storage device S3 may obtain the metadata stream of the file system F1. Similarly, the storage device S2 shares the metadata stream of the file system F2, and the storage device S3 may obtain the metadata stream of the file system F2. The storage device S3 obtains the view of the union file system based on the metadata stream of the file system F1 and the metadata stream of the file system F2.

In a possible design, the metadata streams of the different file systems may alternatively be integrated. Optionally, a record of the metadata stream includes an identifier of the file system to distinguish the metadata streams of the different file systems.

Optionally, the metadata sharing system shown in FIG. 12 further includes a data management system 1204. The data management system 1204 can manage data in the union file system, for example, is configured to implement data query, data profiling, and data usage monitoring.

Further, optionally, the metadata sharing system shown in FIG. 12 may further be connected to one or more services (not shown in FIG. 12), including but not limited to one or more of a data service (for example, data migration and data backup), a message queue service, a global metadata service, a global data service, a data scheduling service, and a metadata analysis service. Certainly, the service may also be a service, software, or the like customized by a tenant.

It should be understood that, in the metadata sharing system shown in FIG. 12, a communication line used for communication between different main bodies may include one or more of a physical link, a data link, a bus, and the like.

In a possible design, communication of the metadata sharing system shown in FIG. 12 may be implemented through the bus. The bus may be hardware, software, or a combination of hardware and software. For example, a bus 1205 is a virtual bus.

The following describes in detail a method in embodiments of this application.

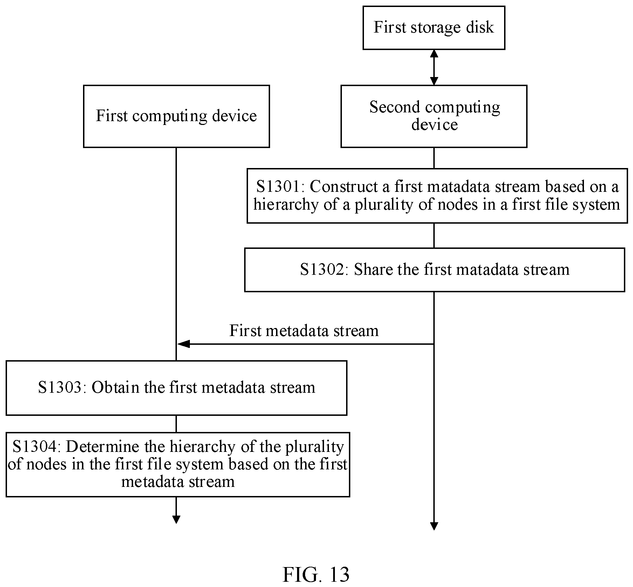

FIG. 13 is a schematic flowchart of a data processing method according to an embodiment of this application. Optionally, the method may be applied to the foregoing metadata sharing system, for example, the metadata sharing system described in the implementation in FIG. 9, FIG. 10, FIG. 11, or FIG. 12.

The data processing method shown in FIG. 13 may include one or more of step S1301 to step S1304. It should be understood that, for ease of description in this application, a sequence of S1301 to S1304 is used for description, but this is not intended to limit execution that is necessary in the foregoing sequence. An execution sequence, an execution time point, a quantity of execution times, and the like of the foregoing one or more steps are not limited in embodiments of this application.

Step S1301 to step S1304 are specifically as follows.

Step S1301: A second computing device constructs a first metadata stream based on a hierarchy of a plurality of nodes in a first file system.

The second computing device is a device having a computing capability. For example, the second computing device may include an apparatus such as a controller, a processor, and a virtual computing instance. The virtual computing instance may be a virtual machine, a container, or the like. For another example, the second computing device may include devices such as a server or a host.

The first file system is a file system or a group of file systems. The first file system is a file system whose identifier is a specified identifier. The identifier of the file system may include an identity (identification, ID), a number, a name, or the like of the file system.

Optionally, data of the first file system may be stored in a first storage disk connected to the second computing device.

The first file system includes a plurality of nodes. Any one of the plurality of nodes is connected to a parent node in a child form, to form a tree structure. A root node is a root directory. The hierarchy of the file system includes the parent node and/or one or more nodes in the parent node.

The first metadata stream is a streaming structure and includes a plurality of records. Each record includes an identifier (for example, an inode) of one node in the first file system, an identifier (for example, a pinode) of a parent node of the node, and an attribute of the node. For related descriptions of the structure of the first metadata stream, refer to related descriptions in FIG. 5, FIG. 7, and FIG. 8. Details are not described one by one herein again.

In a possible implementation, the hierarchy includes a logical relationship of the file system, for example, a parent-child relationship between nodes, a sibling relationship between nodes, or a relationship between different subtrees. When constructing a metadata stream, the second computing device constructs a metadata stream of the first file system based on a logical relationship of the first file system.

In some scenarios, metadata streams are partially ordered.

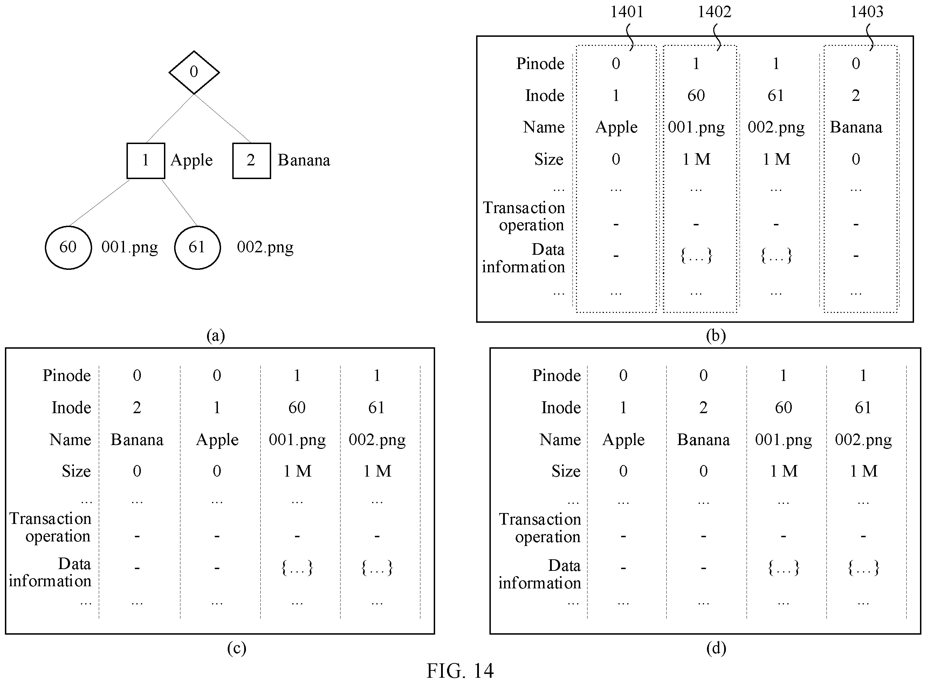

In a possible implementation, in the metadata stream, a record corresponding to the parent node is prior to a record of a child node in the parent node. FIG. 14 is a diagram of a hierarchy and a metadata stream of a file system according to an embodiment of this application. The hierarchy of the file system is shown in (a) in FIG. 14, and reflects a parent node, a child node, a leaf node, and the like of a plurality of nodes. In the hierarchy of the file system, two nodes in a root directory (an inode is 0) are respectively a node 1 (namely, a node whose inode is "1") and a node 2 (namely, a node whose inode is "2"). Child nodes of the node 1 are a node 60 (namely, a file whose inode is "60") and a node 61 (namely, a file whose inode is "61"). As shown in (b) in FIG. 14, in the metadata stream, a record (as shown in an area 1401) corresponding to the node 1 is prior to a record (as shown in an area 1402) corresponding to the node 60 and a record (as shown in an area 1403) corresponding to the node 61.

Optionally, there are a plurality of possible cases of a sequence, in the metadata stream, of records corresponding to the sibling nodes.

For example, in the parent node, a record corresponding to the left child node is prior to a record corresponding to the right child node. As shown in (b) in FIG. 14, the record corresponding to the node 1 is prior to a record corresponding to the node 2.

For another example, in a parent directory, a record corresponding to a right child node is prior to a record corresponding to the left child node. As shown in (c) in FIG. 14, a record corresponding to the node 2 is prior to the record corresponding to the node 1.

In some possible designs, a sequence of records of files of different subtrees may not be limited.

For example, a record corresponding to a node in the left subtree is prior to a record corresponding to a node in the right subtree. As shown in (b) in FIG. 14, the record corresponding to the node 1, the record corresponding to the node 60, and the record corresponding to the node 61 are all prior to the record corresponding to the node 2.

For another example, a record corresponding to a node in the right subtree is prior to a record corresponding to a node in the left subtree.

In some possible designs, a record corresponding to a sibling node of the node is prior to a record corresponding to a child node of the node. As shown in (d) in FIG. 14, the record corresponding to the node 2 is prior to the record corresponding to the node 60 and the record corresponding to the node 61.

In a possible implementation, a first computing device may scan the hierarchy of the first file system, to determine the hierarchy of the plurality of nodes in the first file system.

In another possible implementation, the first file system has metadata in a private format. The metadata stream in the private format records the hierarchy of the first file system. The first computing device may scan the metadata in the private format of the file system, and process the metadata in the private format, to obtain the metadata stream of the first file system. Processing the metadata in the private format may include tabulation processing, streaming processing, and the like, and generating a record that can be appended to the metadata stream.

Step S1302: The second computing device shares the first metadata stream.

In a possible implementation, the second computing device may share the first metadata stream by using a global metadata service. The global metadata service is used to manage the first metadata stream and implement synchronization of the first metadata stream between a plurality of devices. The second computing device may push the first metadata stream to the global metadata service. A device sharing the first metadata stream may obtain the first metadata stream from the global metadata service.

In another possible implementation, the second computing device may send the first metadata stream to another device (for example, the first computing device). It should be understood that a sending manner herein may be direct sending, or may be indirect sending. For the indirect sending manner, the second computing device may send the first metadata stream to a shared device (for example, a shared storage pool or an intermediate storage device), and another device may obtain the first metadata stream from the shared device.

Optionally, after the second computing device shares the first metadata stream, a record may be further appended to the first metadata stream. For example, the second computing device performs a change operation on the first file system. In this case, a record may be appended to the metadata stream, to synchronize update on the file system between the plurality of devices sharing the first metadata stream. Certainly, the another device may also append a record to the first metadata stream.

In a possible implementation, the first metadata stream may include a checkpoint and a CDC stream. Further, the appended record is added to an end of the CDC stream. For related descriptions of the checkpoint and the CDC stream, refer to the descriptions in the embodiment shown in FIG. 4. Details are not described herein again.

Step S1303: The first computing device obtains the first metadata stream.

The first computing device is one of the plurality of devices sharing the first metadata stream, and therefore can obtain the first metadata stream. Optionally, the first computing device may obtain the first metadata stream from the global metadata service. Alternatively, optionally, the first computing device may receive the first metadata stream sent by the second computing device.

Optionally, the metadata stream obtained by the first computing device may be the first metadata stream constructed by the second computing device. In this case, no new record is appended to the first metadata stream.

Alternatively, the metadata stream obtained by the first computing device may be a metadata stream to which the record is appended. For example, the first metadata stream includes a checkpoint and a CDC stream. The CDC stream includes a record appended due to a change of the file system.

Step S1304: The first computing device determines the hierarchy of the plurality of nodes in the first file system based on the first metadata stream.

The record in the metadata stream includes an identifier of a node and an identifier of a parent node of the node. For any node, the first computing device may determine a topology relationship between nodes based on the node and a parent node, to obtain a hierarchy of a plurality of nodes. As shown in (b) in FIG. 14, the first computing device may determine, based on the record shown in the area 1401, that a parent node of the node 1 is a root directory. Similarly, based on the record shown in the area 1402, it may be determined that a parent node of the node 60 may be the node 1. Another case is deduced by analogy, to obtain the hierarchy of the plurality of nodes.

In a possible implementation, the first computing device may construct a file view. The file view includes the hierarchy of the first file system. Optionally, the file view may further include node-related information, for example, a node name and a node type.

Optionally, the file view may be presented in a plurality of implementations. For example, the file view may be presented by using a tree structure, for example, the file view of the file system F1 shown in FIG. 11. For another example, the file view may be presented in a form of a folder or a node directory, for example, the file view shown in the area 1203, the area 1201, or the area 1201 in FIG. 12.

By using the file view, a service application or a user can intuitively obtain the hierarchy of the first file system, perform a change operation on the node in the first file system as required, and/or access the node in the file system as required.

The following first describes a case related to a node change.

When using the file system, the user or the service application often needs to change the file system. For example, in the view of the first file system, the user newly adds a node, modifies the attribute of the node, moves the node, deletes the node, or the like in the file system by performing an interface operation like tapping, touching and holding, double tapping, and selecting. For another example, an administrator, a data scheduling engine, or a data management system performs migration, tiering, and data backup on the node in the file system as required. In these processes, the node in the file system is changed.

Optionally, the user or the service application may change the file system by initiating an input/output (input/output, I/O) request. For example, the file view constructed by the first computing device may be provided for the host and presented on a display device connected to the host. A user of the host may perform, on an interface presenting the file view, the interface operation to initiate the I/O request. For another example, the service application invokes an interface to initiate the I/O request.

In a possible implementation, the first computing device obtains a first I/O request. The first I/O request indicates to perform a change operation on a first file. The change operation may include one or more of new addition, modification, movement, or deletion.

For example, a type of the change operation is new addition. In this case, a first node is a newly added file or directory in the first file system.

For example, a type of the change operation is update, deletion, or movement. In this case, a first node is a node that already exists in the first file system. Optionally, the first node is the file or the directory that already exists in the first file system. Therefore, the first metadata stream already includes a record corresponding to the first file. For example, the first metadata stream includes a record (referred to as a second record below for ease of description) corresponding to the first node. The second record includes an identifier of the first node, an identifier of a parent node of the first node, and an attribute of the first node. It may be understood that the second record may be one record, or may be a plurality of records. For example, the first node is already modified before. In this case, the metadata stream may include a plurality of records corresponding to the first node.

The first I/O request indicates to perform the change operation on the first file. The first computing device needs to synchronize the change operation to the another device. In one aspect, the another device needs to update the hierarchy (or the file view) of the first file system based on the change operation. In another aspect, a device that stores the first file system needs to update a local file system (and/or metadata in the private format) based on the change operation.

In a possible implementation, a change on the file system by the first computing device is synchronized to the another device by using the shared first metadata stream. The following provides descriptions by using an example in which the identifier of the node is the inode and the identifier of the parent node of the node is the pinode.

For example, the first computing device appends the record (referred to as a first record for ease of differentiation) about the first node to an end of the first metadata stream. The first record includes an inode of the first node, a pinode of the first node, and a changed attribute (referred to as a first attribute for ease of differentiation) of the first node. Optionally, the first attribute includes a type of a change operation. The another device (for example, the second computing device) may obtain, by reading the first metadata stream (or reading a newly added record in the metadata stream), the change on the file system by the first computing device, to implement updating the hierarchy (or view) of the file system on the plurality of devices.

A device sharing the metadata stream may be notified of a change of the first metadata stream in the following two manners.

Manner 1: A device or a service maintaining the first metadata stream may send a message to a device (or some specified devices) that shares (or share) the first metadata stream, to indicate that a newly added record exists in the first metadata stream. Optionally, when the first metadata stream is maintained by the device, the device maintaining the first metadata stream may be the first computing device, the second computing device, or another device that has storage space and a computing capability. When the first metadata stream is maintained by the service, the service may also be referred to as a global metadata service or a federation file system metadata service. Further, the service may be provided by the first computing device, the second computing device, a third-party device, or the like.

It should be understood that, in embodiments of this application, the message may be sent in a direct sending manner or an indirect sending manner. In the direct sending mode, a sender sends the message to a receiver. Certainly, the message may be copied in a plurality of copies, respectively sent to a plurality of receivers. The indirect sending manner is implemented in a plurality of manners, for example, a message queue form and an intermediate device forwarding form. The message queue form is used as an example. A message in the message queue may be read by one or more devices. The sender writes the message into the message queue, and the receiver (there may be one or more receivers) may read the message from the message queue, to implement receiving and sending the message.

Manner 2: The device that appends the record to the first metadata stream sends a message to the device (or some specified devices) that shares (or share) the first metadata stream, to indicate that a newly added record exists in the first metadata stream.

For example, the first computing device appends the first record to the end of the first metadata stream. In this case, the first computing device may send a message to the another device, to indicate that the newly added record exists in the first metadata stream. For a manner of sending the message, refer to the foregoing descriptions.

Manner 3: The device sharing the first metadata stream may monitor the change of the first metadata stream. For example, the second computing device actively monitors a case that the new record is appended to the end of the first metadata stream.

It should be understood that the foregoing three manners are possible implementations enumerated for ease of understanding. In a specific implementation process, update of the metadata stream may also be published in another manner. In addition, the foregoing three modes may be further combined, to improve a success rate of metadata stream synchronization, and improve user experience.

The foregoing provides descriptions by using an example in which the first computing device appends the record to the metadata stream. In a specific implementation process, the another device (for example, the device sharing the metadata stream or a device having record appending permission) may also append a new record to the metadata stream. In this case, for a manner of appending the record and a manner of notifying a change of the metadata stream, refer to the foregoing descriptions of the side of the first computing device.

When the first metadata stream is changed, the device sharing the metadata stream needs to obtain the change of the metadata stream (or an updated metadata stream). Further, the file view is updated based on the change of the metadata stream (or the updated metadata stream), to improve validity and accuracy of the view.

The first computing device is used as an example. When the new record appears at the end of the first metadata stream, the first computing device constructs a new file view (which may be considered as an updated first file view) based on the updated first metadata stream. The new file view includes an updated hierarchy of the plurality of nodes in the first file system. Certainly, the newly added record may be appended by the first computing device, or may be appended by the another device (for example, the device sharing the metadata stream or the device that has the record appending permission).

The foregoing provides descriptions by using an example in which the first computing device appends the record to the first data stream. The following describes another implementation of synchronizing the change of the file system.

In a possible implementation, the first computing device may send a change request to the second computing device. The change request indicates the change operation on the file system by the first computing device. The second computing device appends the record to the end of the first metadata stream, so that the device sharing the first metadata stream know the change of the file system.

As mentioned above, the file view of the file system helps the user or the service access a file in the file system as required. However, in some possible cases, although the computing device may provide the view of the first file system for the user or the application, data of the file system is still stored in a remote storage device (for example, a second storage device connected to the second computing device). In this case, the first computing device needs to obtain data of the node from the remote storage device.

In a possible implementation, the record of the metadata stream includes storage layout information of the node. The storage layout information indicates a device storing data content of the node. The first computing device may obtain, based on the layout information of the node, data content of the file from the device storing the data content of the node.

For example, the first file system includes a second node (optionally, the second node belongs to the file). Data content of the second node is stored in a first storage disk. The first metadata stream includes a record (referred to as a third record for ease of differentiation) about the second node. The third record includes an attribute of the second node. The attribute of the second node includes storage layout information of the second node. For example, the storage layout information of the second node may indicate a storage device to which the first storage disk belongs (or indicate the first storage disk). When the first computing device needs to read the data content of the second node, the data of the second node may be obtained from the storage device to which the first storage disk belongs and/or the first storage disk.

In some possible implementations, the user or the service application may obtain the data content of the node by initiating an I/O request (referred to as a second I/O request for ease of differentiation). For example, the host runs the service application, and the service application needs to read the data of the file in the file system. In this case, the host may initiate the second I/O request.

In a possible solution, the first computing device obtains the second I/O request. The second I/O request indicates to read the data content of the second node. The storage layout information of the second node indicates a storage device X. In this case, the first computing device may obtain the data content of the second node from the storage device X. Further, the first computing device may respond to the second I/O request with the data content of the second node. In this way, the user or the application may obtain the data content of the second node.

The device can append the record to the metadata stream. Therefore, the metadata stream may include metadata of a node in a plurality of periods. As changes of the file system are increasingly more, a data amount of the metadata stream increases, finally severely affecting access and synchronization efficiency.

In a possible implementation, the first computing device may perform a merging operation on the first metadata stream, to merge, into one record, a plurality of records corresponding to a same node in the first metadata stream. For related content of the merging operation, refer to related descriptions in Design 6.

Optionally, the merging operation may be performed periodically or aperiodically. For example, the metadata stream is merged once at a specific time interval.

Alternatively, optionally, a trigger condition is set for the merging operation. For example, the merging operation is performed each time a new device joins the device sharing the metadata stream. For another example, the merging operation is performed each time a size of a CDC stream exceeds a preset CDC stream threshold.

Certainly, the operation of merging the first metadata may alternatively be performed by the second computing device, or may be performed by the another device sharing the first metadata stream, or may be performed by the device or the service maintaining the first metadata stream. Details are not described one by one herein again.

In the embodiments shown in FIG. 13, metadata of heterogeneous file systems is expressed in a unified manner by using a metadata stream with a streaming structure. In the unified expression manner, a difference between management and access control manners of the metadata between the heterogeneous file systems can be shielded, and a difference between devices that store the heterogeneous file systems can also be shielded. In other words, in the unified expression manner of metadata with a streaming structure in this application, the metadata between the heterogeneous file systems can be streamlined. Therefore, data in the heterogeneous file systems is no longer isolated data islands. This greatly improves convenience of data use and management for the user.

In addition, a manner of uniformly expressing metadata of the file in this application is a streaming structure. Therefore, features of "read-only", "append-only", and "orderliness" of the streaming structure can reflect various change operations in the file system, that is, the expression manner of the metadata with the streaming structure in this application can dynamically reflect the change of the file system.

In the embodiment shown in FIG. 13, descriptions are provided by using an example in which the first computing device obtains the first metadata stream shared by the second computing device. In some possible designs, in addition to receiving the first metadata stream, the first computing device may further receive another metadata stream, and determine a hierarchy of a plurality of file systems based on the plurality of metadata streams. The following provides example descriptions of this design. It should be understood that, for some terms and logic in the following descriptions, refer to the descriptions in the embodiment shown in FIG. 13.

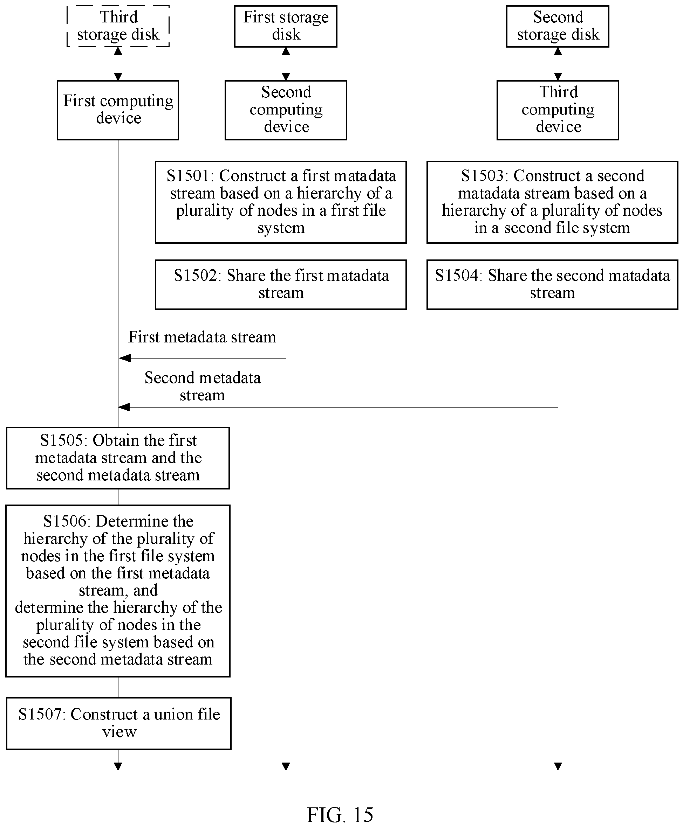

FIG. 15 is a method flowchart of another data processing method according to an embodiment of this application. Optionally, the method may be applied to the foregoing metadata sharing system, for example, the metadata sharing system described in the implementation in FIG. 9, FIG. 10, FIG. 11, or FIG. 12.

The data processing method shown in FIG. 15 may include one or more of step S1501 to step S1507. It should be understood that, for ease of description in this application, a sequence of S1501 to S1507 is used for description, but this is not intended to limit execution that is necessary in the foregoing sequence. An execution sequence, an execution time point, a quantity of execution times, and the like of the foregoing one or more steps are not limited in embodiments of this application.

Step S1501: A second computing device constructs a first metadata stream based on a hierarchy of a plurality of nodes in a first file system.

Optionally, the first file system may be stored in a first storage disk connected to the second computing device. For related descriptions, refer to step S1301.

Step S1502: The second computing device shares the first metadata stream.

For related descriptions, refer to step S1302.

Step S1503: A third computing device constructs a second metadata stream based on a hierarchy of a plurality of nodes in a second file system.

Optionally, the second file system may be stored in a second storage disk connected to the third computing device. For related descriptions, refer to step S1301.

Step S1504: The third computing device shares the second metadata stream.

For related descriptions, refer to step S1302.

Step S1505: The first computing device obtains the first metadata stream and the second metadata stream.

For related descriptions, refer to step S1303. Optionally, the first computing device may be connected to a third storage disk. The third storage disk optionally stores data of a third file system.

It should be understood that the first computing device may obtain the first metadata stream and the second metadata stream at the same time, or may first obtain the first metadata stream and then obtain the second metadata stream, or vice versa.

Step S1506: The first computing device determines the hierarchy of the plurality of nodes in the first file system based on the first metadata stream, and determines the hierarchy of a plurality of nodes in the second file system based on the second metadata stream.

For related descriptions, refer to step S1304.

It should be understood that, after obtaining the first metadata stream, the first computing device determines the hierarchy of the plurality of nodes in the first file system based on the first metadata stream. Correspondingly, after obtaining the second metadata stream, the first computing device determines the hierarchy of the plurality of nodes in the second file system based on the second metadata stream.

Certainly, when the first computing device obtains the first metadata stream and the second metadata stream at the same time, the first computing device separately determines the hierarchy of the plurality of nodes in the first file system and the hierarchy of the plurality of nodes in the second file system based on the first metadata stream and the second metadata stream.

Optionally, the embodiment shown in FIG. 15 may further include step S1507. Details are as follows.

Step S1507: The first computing device constructs a union file view.

The union file view includes the hierarchy of the first file system and the hierarchy of the second file system. Optionally, the file view may further include node-related information, for example, a node name and a node type. For related descriptions, refer to related descriptions of the file view in step S1304.

In a possible implementation, after obtaining the first metadata stream, the first computing device may construct a file view based on the first metadata stream. The file view includes the hierarchy of the first file system.

After obtaining the second metadata stream, the first computing device may update the file view. An updated file view includes the hierarchy of the second file system. The hierarchy of the plurality of nodes in the second file system is obtained based on the second metadata stream.

In this case, the updated file view is considered as the foregoing union file view. To be specific, the updated file view includes the hierarchy of the first file system and the hierarchy of the second file system.

In a possible implementation, the first storage disk and the second storage disk are cross-region and heterogeneous storage disks. For example, the first storage disk (or further including the second computing device) is located in a first data center. The second storage disk (or further including the third storage device) is located in a second data center. The first data center and the second data center are different data centers.

In this case, in embodiments of this application, flow of the metadata on cross-data center and cross-heterogeneous devices can be implemented. This helps implement a cross-region, cross-device, and cross-heterogeneous union file system.

In another possible manner, the first storage disk and the second computing device are located in a first data center. The second storage disk and the third computing device are located in a second data center. The third storage disk and the first computing device are located in a third data center.

In the embodiment shown in FIG. 14, the first computing device, the second computing device, and the third computing device implement sharing and flow of the metadata by using the metadata stream with the streaming structure. The first computing device can externally provide a view of the union file system by obtaining metadata streams in a plurality of devices. In this way, the user or the service application can conveniently view a hierarchy of a plurality of file systems. This improves service quality of the file system. In addition, a view of a file system is synchronized between the plurality of devices by using the shared metadata stream. This helps implement loose coupling collaboration of a multi-device system (a system including the plurality of devices), and improves flexibility and scalability of the system.

In some possible designs, a producer and a consumer of the metadata stream may be a same device. The following provides descriptions by using an example in which the first computing device shares a metadata stream of a file system with another device and also obtains a metadata stream shared by the another device. It should be understood that, for some terms and logic in the following descriptions, refer to the descriptions in the embodiment shown in FIG. 13.

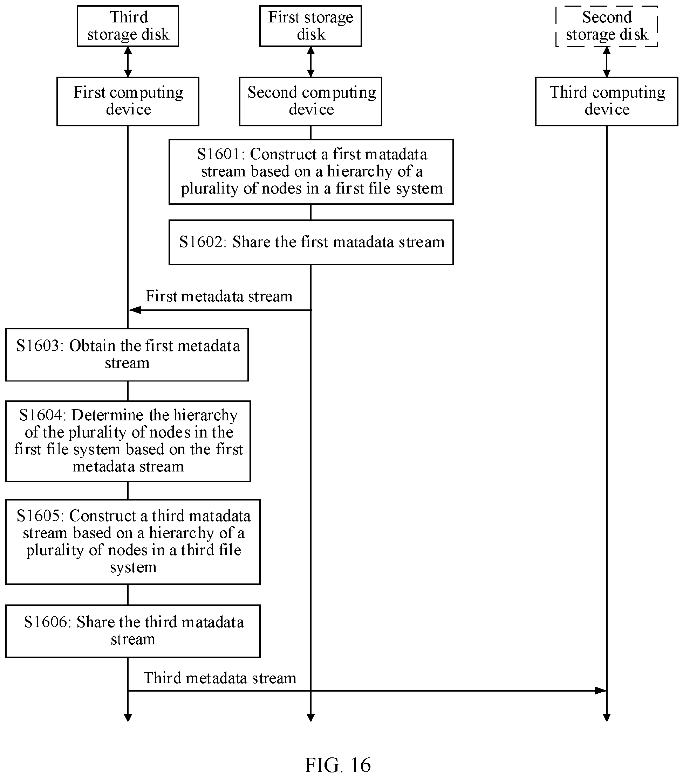

FIG. 16 is a method flowchart of still another possible data processing method according to an embodiment of this application. Optionally, the method may be applied to the foregoing metadata sharing system, for example, the metadata sharing system described in the implementation in FIG. 9, FIG. 10, FIG. 11, or FIG. 12.

The data processing method shown in FIG. 16 may include one or more of step S1601 to step S1606. It should be understood that, for ease of description in this application, a sequence of S1601 to S1606 is used for description, but this is not intended to limit execution that is necessary in the foregoing sequence. An execution sequence, an execution time point, a quantity of execution times, and the like of the foregoing one or more steps are not limited in embodiments of this application.

Step S1601: A second computing device constructs a first metadata stream based on a hierarchy of a plurality of nodes in a first file system.

Optionally, the first file system may be stored in a first storage disk connected to the second computing device. For related descriptions, refer to step S1301.

Step S1602: The second computing device shares the first metadata stream.

For related descriptions, refer to step S1302.

Step S1603: The first computing device obtains the first metadata stream.

For related descriptions, refer to step S1303.

It should be understood that the first computing device may obtain the first metadata stream and the second metadata stream, or may first obtain one of the first metadata stream and the second metadata stream, and then obtain the other of the first metadata stream and the second metadata stream.

Step S1604: The first computing device determines the hierarchy of the plurality of nodes in the first file system based on the first metadata stream.

For related descriptions, refer to step S1304.

Step S1605: The first computing device constructs a third metadata stream based on a hierarchy of a plurality of nodes in a third file system.

Optionally, the third file system may be stored in a third storage disk connected to the first computing device. For related descriptions, refer to step S1301.

Step S1606: The first computing device shares the third metadata stream.

For related descriptions, refer to step S1302.

In the embodiment shown in FIG. 16, the first computing device, the second computing device, and a third computing device implement metadata sharing and flow of metadata by using a metadata stream with a streaming structure. The first computing device can obtain a view of a file system in another device by using the metadata stream, and can also share a metadata stream of a file system on a storage device connected to the first computing device, so that the another device obtains a view of the file system. In this way, a user or a service application can conveniently view a hierarchy of a plurality of file systems. This improves service quality of the file system. In addition, a view of a file system is synchronized between the plurality of devices by using the shared metadata stream. This helps implement loose coupling collaboration of a multi-device system (a system including the plurality of devices), and improves flexibility and scalability of the system.

The following describes a possible design of processing a hard link of a node in a file system in a scenario of synchronizing the file system based on a metadata stream according to an embodiment of this application.

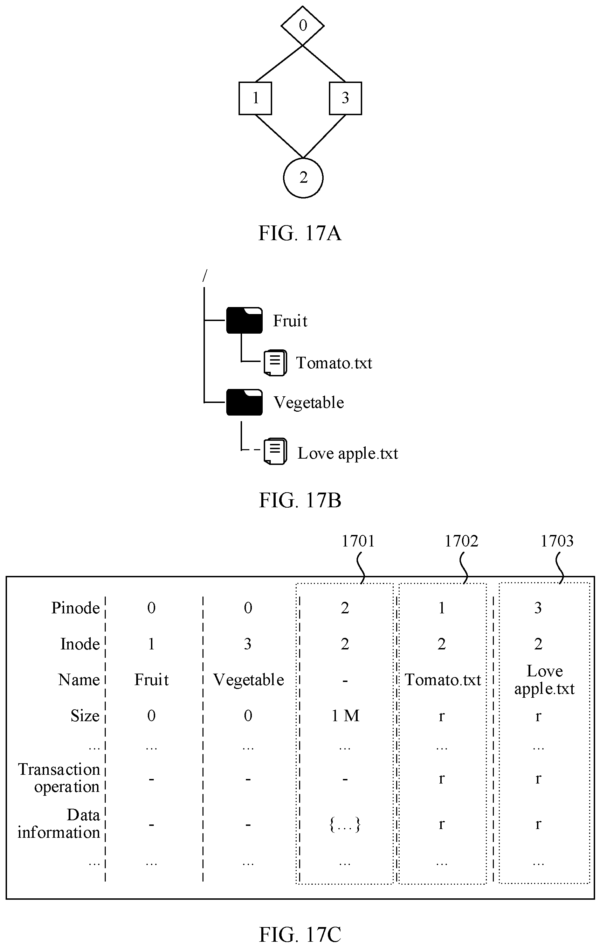

The hard link of the node means that different node names are connected to a same inode. FIG. 17A is a diagram of an inode of a file system including a hard link according to an embodiment of this application. Both a node 1 and a node 3 have nodes pointing to an inode 2.

FIG. 17B shows a view of the file system according to an embodiment of this application. A name of the node 1 is "Fruit". The node 1 includes a node whose name is "Tomato.txt", and an inode of the node whose name is "Tomato.txt" is 2. A name of the node 2 is "Vegetable". The node 2 includes a node whose name is "Love apple.txt", and an inode of the node whose name is "Love apple.txt" is also 2. It can be learned that different node names in different parent nodes point to a same inode. In this case, the node whose name is"Tomato.txt" and the node whose name is "Love apple.txt" are hard link nodes. A file system in which the nodes are located is a file system including a hard link.

A metadata stream of the file system including the hard link may be in the following several cases.

Case 1: When a metadata stream is constructed, the hard link node already exists in the file system. In this case, the metadata stream includes a record (for ease of description, referred to as a record with a same inode and a same pinode) in which a node identifier field and a parent node identifier field are the same. The record indicates that a specified node (a node corresponding to an inode number) has a hard link. Further, the metadata stream further includes a record of the hard link node. In the record of the hard link node, a pinode number is an identifier of a parent node of the hard link node, and an inode number is the same as the inode number of the specified node.

For example, FIG. 17C is a diagram of a metadata stream according to an embodiment of this application. The metadata stream is a metadata stream constructed based on the file system shown in FIG. 17A. The metadata stream includes a record 1701. A pinode and an inode of the record 1701 are the same, which indicates that a node whose inode is 2 has a hard link. Further, the data stream further includes a record 1702 and a record 1703. In the record 1702, an inode is 2 and a pinode is 1, which indicates that a hard link node of the node 2 exists in the node 1. A name of the hard link node is "Tomato.txt". In the record 1703, an inode is 2 and a pinode is 3, which indicates that a hard link node of the node 2 exists in the node 3. A name of the hard link node is "Love apple.txt".

Optionally, in the metadata stream that is the file system and in which the hard link node exists, a location of a record that has a same inode and a same pinode is before a location of a record corresponding to a hard link node of the inode. To be specific, a ranking of the record 1701 in the metadata stream is prior to that of the record 1702 and that of the record 1703.

It should be noted that "r" shown in FIG. 17C indicates referring to an attribute in the record 1701. In this implementation, an attribute of the hard link node may not need to be repeatedly stored. This further reduces storage consumption of the metadata stream, and improves update efficiency of the metadata stream, thereby improving user experience.

There are many nodes in the file system, and checking whether the nodes are hard link nodes one by one consumes a lot of computing resources and takes a long time. Therefore, the node having the hard link can be recorded by using a data collection status (ingestor state).

Specifically, the ingestor state may record an inode and a pinode list of the node having the hard link in the file system. For example, Table 1 shows an ingestor state table provided in an embodiment of this application. For example, the ingestor state table includes an inode of a file having a hard link and a pinode list of a hard link node of the file.

**Table 1: Ingestor state table**

| Serial number | Inode of a node having a hard link | Pinode |
|---|---|---|
| 1 | 2 | 1, 3 |
| ... | ... | ... |

Optionally, the ingestor state may be stored by using a correspondence set, a table, a queue, a linked list, or the like. A storage and transmission format of the ingestor state is not limited in this application. For example, the ingestor state may alternatively be represented as 2->[1, 3].

In a possible implementation, the ingestor state may be maintained or managed by a device (for example, the foregoing first computing device or the foregoing second computing device) that constructs metadata, may be maintained or managed by any one of a plurality of devices sharing the metadata stream, or may be maintained or managed by a metadata service.

Case 2: In the file system in which the metadata stream already exists, a hard link is created for a node. The node does not have a hard link.

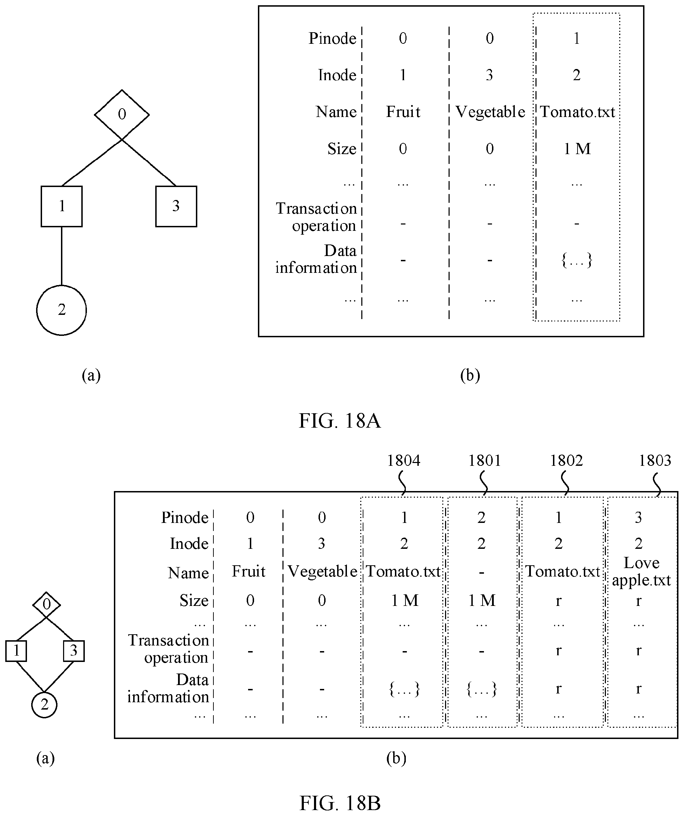

For example, FIG. 18A is a diagram of a file system existing before a hard link is created and a metadata stream of the file system according to an embodiment of this application. Herein, (a) in FIG. 18A is a diagram of an inode of the file system, and (b) in FIG. 18A is a diagram of a metadata stream of the file system.

A record already existing in the metadata stream cannot be modified. Therefore, a record may be appended to the metadata stream to indicate that the hard link is created for a file.

FIG. 18B is a diagram of a file system obtained after a hard link is created and a metadata stream of the file system according to an embodiment of this application. Herein, (a) in FIG. 18B is a diagram of an inode of the file system, and (b) in FIG. 18B is a diagram of a metadata stream of the file system.

It can be learned that, after the hard link is created, the record 1801, the record 1802, and the record 1803 are newly added to the metadata stream. For the record 1801, a pinode is the same as an inode (a value of the inode is 2), which indicates that the hard link is created in the node 2. In the record 1802, an inode is 2 and a pinode is 1, which indicates that the hard link node of the node 2 exists in the node 1. A name of the hard link node is "Tomato.txt". In the record 1803, an inode is 2 and a pinode is 3, which indicates that a hard link node of the node 2 exists in the node 3. A name of the hard link node is "Love apple.txt".

Optionally, for attributes of the nodes in the record 1802 and the record 1802, refer to the attribute of the record 1801.

In a possible implementation, the inode and the pinode of the record 1802 are the same as those of the record 1804 (that is, indexes are the same). When the indexes are the same, a file appended later indicates modification of the file. Therefore, the record 1803 may represent a current attribute of the node 2 of the node 1. Further, after the metadata stream is merged, the record 1802 may be retained, to accurately represent the current attribute of the node 2 of the node 1.

Case 3: In the file system in which the metadata stream already exists, a hard link node is created again for a node in which a hard link already exists. In this case, a record may be appended to a metadata stream, to indicate a directory of a new hard link node, without inserting a record whose pinode and inode are the same.

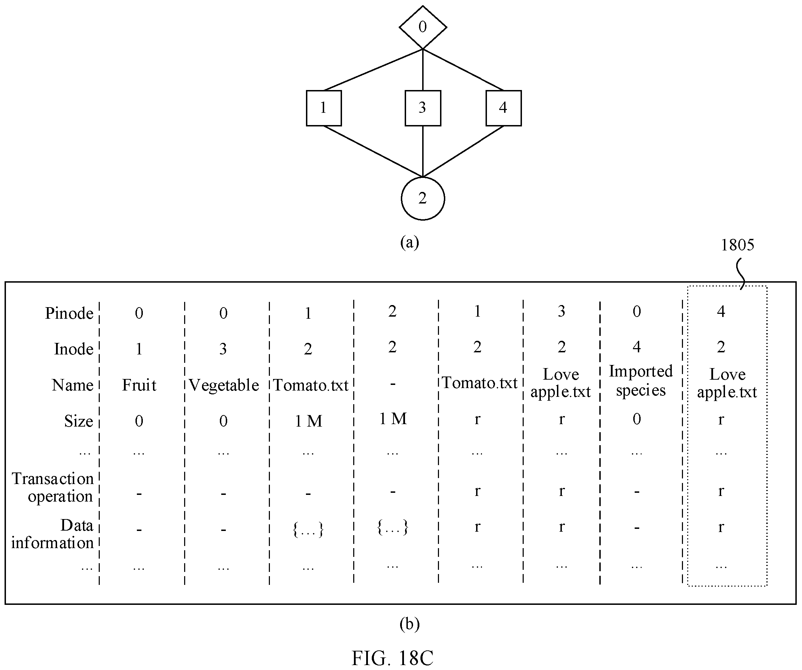

FIG. 18C is a diagram of another file system obtained after a hard link is created and a metadata stream of the file system according to an embodiment of this application. Herein, (a) in FIG. 18C is a diagram of an inode of the file system, and (b) in FIG. 18C is a diagram of a metadata stream of the file system. A record 1805 is newly added to the metadata stream through an operation of creating the hard link. In the record 1805, an inode is 2 and a pinode is 4, which indicates that a hard link node of the node 2 exists in the node 4. A name of the hard link node is "Love apple.txt".

In a possible implementation, a hard link node that appears for the first time and a hard link node that appears subsequently may be far away from each other. For example, the record 1805 may be far away from an original record 1801 in terms of time. Certainly, a time interval between hard link nodes is not limited in this application.

In a possible implementation, after the hard link node is created, an ingestor state needs to be correspondingly updated. Table 2 shows another ingestor state table provided in an embodiment of this application. For example, the ingestor state table includes an inode having a hard link and a pinode list of the node.

**Table 2: Ingestor state table**

| Serial number | Inode of a node having a hard link | Pinode |
|---|---|---|
| 1 | 2 | 1,3,4 |
| ... | ... | ... |

Optionally, an updated ingestor state may alternatively be represented as 2->[1, 3, 4].

Case 4: A hard link node is deleted from the file system in which the metadata stream already exists. In this case, a record including a delete flag may be appended to the metadata stream, to indicate to the hard link node of the node.

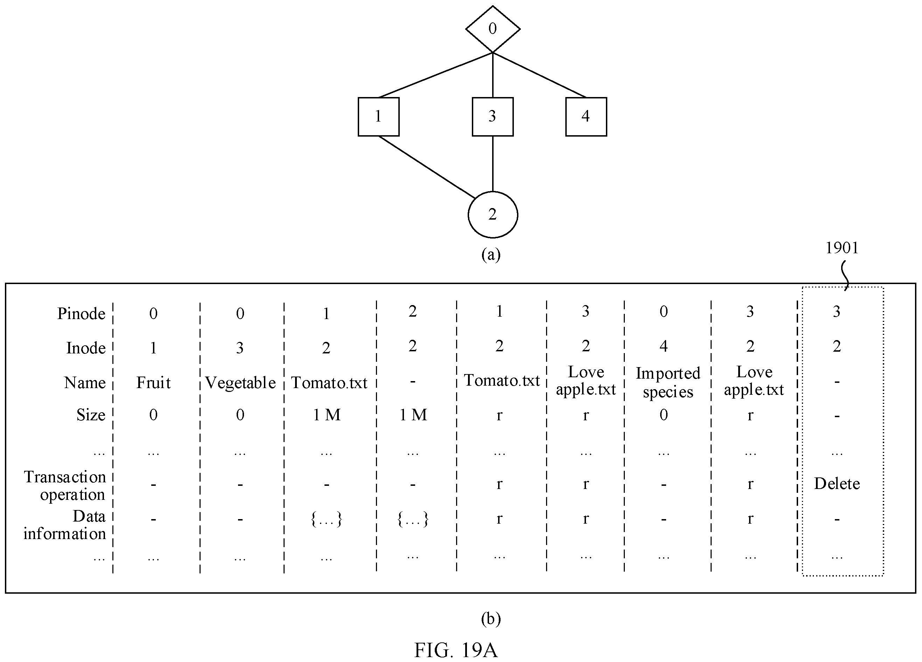

FIG. 19A is a diagram of a file system obtained after a hard link node is deleted and a metadata stream of the file system according to an embodiment of this application. Herein, (a) in FIG. 19A is a diagram of an inode of the file system, and (b) in FIG. 19A is a diagram of a metadata stream of the file system. A record 1901 is appended to the metadata stream. In the record 1901, an inode is 2, a pinode is 3. A change operation field indicates a deletion operation, which indicates to delete a hard link node of a node 2 in the node 3.

It should be understood that, in the deletion scenario shown in FIG. 19A, after the hard link node is deleted, the node 2 still includes a plurality of hard links.

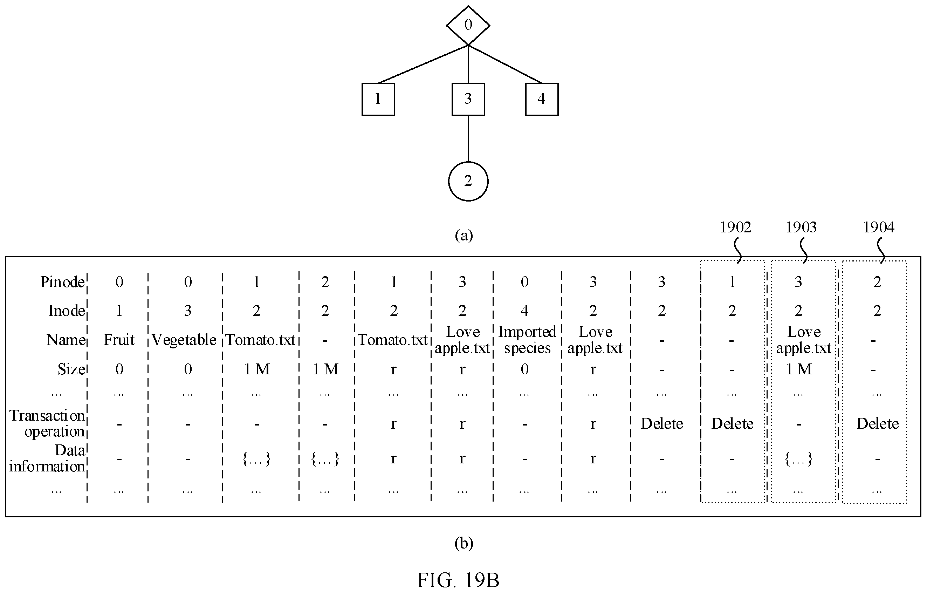

After the hard link node is deleted, when the node is restored to a non-hard link node, a record with a same pinode and inode should further need to be deleted. FIG. 19B is a diagram of a file system obtained after a hard link node is deleted and a metadata stream of the file system according to an embodiment of this application. Herein, (a) in FIG. 19B is a diagram of an inode of the file system, and (b) in FIG. 19B is a diagram of a metadata stream of the file system. A hard link of a node 2 is deleted from the file system, and the node 2 is restored to a non-hard link file.

A record 1902, a record 1903, and a record 1904 are appended to the metadata stream. In the record 1902, an inode is 2, a pinode is 1, and a change operation field indicates a deletion operation, which indicates to delete a hard link node of the node 2 in a node 1. In a record 1903, an inode is 2, a pinode is 3, and an attribute value includes an attribute of the node 2, which indicates to a record of a non-hard link node 2. In a record 1904, an inode is 2, a pinode is 2, and a change operation field indicates a deletion operation, which indicates to delete a record with a same index as the record 1904.

Optionally, when the node having the hard link is restored to an ordinary node (different from a node in which the hard link exists), a location of a record that has a same inode and pinode and that includes a delete flag is after that of a record corresponding to the node is restored to the ordinary node. To be specific, a ranking of the record 1904 in the metadata stream is after that of the record 1903.

It should be understood that a device appending the record to the metadata stream may be a computing device that constructs metadata, any device in a plurality of devices sharing the metadata stream, or may be a metadata service. An implementation related to the hard link may be combined with the foregoing data processing method. For example, a related operation of constructing the metadata stream of the file system including the hard link node may be combined with step S1301. For another example, the hard link created in the file system in which the metadata stream already exists may be a change operation performed after the computing device receives an I/O request. Combination cases are not described one by one herein again.

The foregoing describes the method in embodiments of this application, and the following provides an apparatus in embodiments of this application.

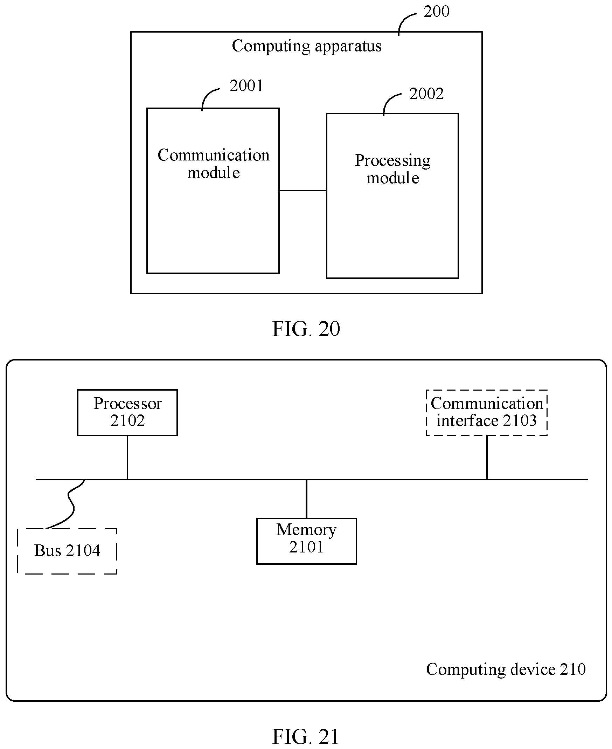

FIG. 20 is a diagram of a structure of a computing apparatus 200 according to an embodiment of this application. The computing apparatus 200 may include a communication module 2001 and a processing module 2002. The computing apparatus 200 is configured to implement the foregoing data processing method, for example, the data processing method in the embodiment shown in FIG. 13, FIG. 15, or FIG. 16.

Optionally, the computing apparatus 200 may be the computing device, the storage device, the controller, or the like in the foregoing embodiments. For example, the computing apparatus 200 is the first computing device, the second computing device, or the third computing device in the embodiment shown in FIG. 9, FIG. 11, FIG. 13, FIG. 15, or FIG. 16. For another example, the computing apparatus 200 is the first controller, the second controller, or the storage device in the embodiment shown in FIG. 10. For another example, the computing apparatus 200 is the storage device S1, the storage device S2, or the storage device S3 in the embodiment shown in FIG. 12.

In a possible implementation, the communication module 2001 is configured to obtain a first metadata stream of a first file system. The first metadata stream is from a second computing device. The first metadata stream is a streaming structure and includes a plurality of records. Each record includes an identifier of one node in the first file system, an identifier of a parent node of the node, and an attribute of the node.

The processing module 2002 is further configured to determine a hierarchy of a plurality of nodes in the first file system based on the first metadata stream.

In another possible implementation, the processing module 2002 is further configured to:
construct a file view (referred to as a file view V1 for ease of differentiation), where the file view V1 includes the hierarchy of the plurality of nodes in the first file system.

In still another possible implementation, the processing module 2002 and the communication module 2001 are further configured to:
append a first record to an end of the first metadata stream, where the first record includes an identifier of a first node, an identifier of a parent node of the first node, and a first attribute of the first node, and the first attribute includes a type of a change operation.

In still another possible implementation, the communication module 2001 is further configured to:
obtain a first I/O request, where the first I/O request indicates to perform a change operation on a first node.

In still another possible implementation, the communication module 2001 is further configured to:
send a message to the second computing device, where the message indicates that the first metadata stream is changed, so that the second computing device performs the change operation on the first node based on the first record in the first metadata stream.

In still another possible implementation, the communication module 2001 and the processing module 2002 are further configured to:
when a newly added record appears at an end of the first metadata stream, update the file view (for example, the file view V1) based on an updated first metadata stream, where an updated file view includes an updated hierarchy of the plurality of nodes in the first file system.

In still another possible implementation, the communication module 2001 and the processing module 2002 are further configured to:
obtain a second I/O request, where the second I/O request indicates to read data of a second node, and the second node belongs to the first file system; and
obtain the data of the second node from a first storage disk.

In still another possible implementation, the first metadata stream includes a third record. The third record includes an attribute of a second node in the first file system. The second node is a file. The attribute of the second node includes storage layout information of the second node. The storage layout information of the second node indicates a storage device to which the first storage disk belongs.

In still another possible implementation, the processing module 2002 and the communication module 2001 are further configured to:
perform a merging operation on the first metadata stream, where the merging operation indicates to merge, into one record, a plurality of records corresponding to a same node in the first metadata stream. In this implementation, space occupied by the first metadata stream can be reduced, to reduce storage consumption of the solution.

In still another possible implementation, the communication module 2001 is further configured to:
obtain a second metadata stream of a second file system, where data of the second file system is stored in a second storage disk, the second metadata stream is from the second computing device connected to the second storage disk, or is from a third computing device connected to the storage disk of the second device, and the second computing device is different from the third computing device.

The second metadata stream is a streaming structure and includes a plurality of records. Each of the plurality of records of the second metadata stream includes an identifier of one node in the second file system, an identifier of a parent node of the node in the second file system, and an attribute of the node in the second file system.

The processing module is further configured to construct a file view (referred to as a file view V2 for ease of differentiation). The file view V2 includes the hierarchy of the plurality of nodes in the first file system and a hierarchy of a plurality of nodes in the second file system. The hierarchy of the plurality of nodes in the second file system is obtained based on the second metadata stream.

In still another possible implementation, the processing module 2002 is further configured to:
scan a hierarchy of a plurality of nodes in a third file system, where data of the third file system is stored in a third storage disk connected to the first computing device; and
construct a third metadata stream based on the hierarchy of the plurality of nodes in the third file system, where the third metadata stream is a streaming structure and includes a plurality of records, and each of the plurality records includes an identifier of one node in the third file system, an identifier of a parent node of the node in the third file system, and an attribute of the node in the third file system.

The communication module 2001 is further configured to:
send the third metadata stream to the second computing device, so that the second computing device determines the hierarchy of the plurality of nodes in the third file system based on the third metadata stream.

In a possible implementation, the processing module 2002 is further configured to:
construct a file view (referred to as a file view V3 for ease of differentiation), where the file view V3 includes the hierarchy of the plurality of nodes in the third file system.

Optionally, the file view V3 may further include the hierarchy of the plurality of nodes in the first file system.

In still another possible implementation, a hard link node exists in the third file system. The processing module 2002 is further configured to:
construct the third metadata stream based on the hierarchy of the plurality of nodes in the third file system and a data collection status (ingestor state), where the data collection status indicates a node having a hard link and a list of a parent node of the node having the hard link.

In still another possible implementation, the first data stream includes a fourth record. The fourth record includes a node identifier field, a parent node identifier field, and an attribute of a third node. The node identifier field in the fourth record is an identifier of the third node. The parent node identifier field in the fourth record is an identifier of a fourth node. The fourth node is a directory. The communication module 2001 is further configured to:
obtain a third I/O request, where the third I/O request indicates to create a hard link node of the third node in a fifth node, and the fifth node is a directory; and
append a fifth record, a sixth record, and a seventh record to the end of the first metadata stream.

The fifth record includes a node identifier field, a parent node identifier field, and the attribute of the third node. The node identifier field in the fifth record is the identifier of the third node. The parent node identifier field in the fifth record is the identifier of the third node.

The sixth record includes a node identifier field and a parent node identifier field. The node identifier field in the sixth record is the identifier of the third node. The parent node identifier field in the sixth record is the identifier of the fourth node.

The seventh record includes a node identifier field and a parent node identifier field. The node identifier field in the seventh record is the identifier of the third node. The parent node identifier field in the sixth record is an identifier of the fifth node.

In still another possible implementation, the communication module 2001 is further configured to:
obtain a fourth I/O request, where the fourth I/O request indicates to delete the hard link node of the third node in the fifth node; and
append an eighth record to the end of the first metadata stream.

The eighth record includes a node identifier field, a parent node identifier field, and the attribute of the third node. The node identifier field in the eighth record is the identifier of the third node. The parent node identifier field in the eighth record is the identifier of the fifth node. The attribute of the third node in the eighth record includes an identifier indicating a deletion operation.

In still another possible implementation, the communication module 2001 is further configured to:
if the hard link node of the third node does not exist in the third file, append a ninth record and a tenth record to the end of the first data stream.

The ninth record includes a node identifier field, a parent node identifier field, and the attribute of the third node. The node identifier field in the ninth record is the identifier of the third node. The parent node identifier field in the ninth record is the identifier of the fourth node.

The tenth record includes a node identifier field, a parent node identifier field, and the attribute of the third node. The node identifier field in the tenth record is the identifier of the third node. The parent node identifier field in the tenth record is the identifier of the third node. The attribute of the third node in the tenth record includes the identifier indicating the deletion operation.

FIG. 21 is a diagram of a structure of a computing device 210 according to an embodiment of this application. The computing device 210 is a device having a computing capability. The device herein may be a physical device, for example, a controller, a processor, a server (for example, a rack server), or a host, or may be a virtual device, for example, a virtual machine or a container.

As shown in FIG. 21, the computing device 210 includes a processor 2102 and a memory 2101, and optionally includes a bus 2104 and a communication interface 2103. The processor 2102 communicates with the memory 2101 and the like through the bus 2104. It should be understood that quantities of processors and memories in the computing device 210 are not limited in this application.

The memory 2101 is configured to provide storage space. The storage space may optionally store application data, user data, an operating system, a computer program, and the like. The memory 2101 may include a volatile memory (volatile memory), for example, a random access memory (random access memory, RAM). The memory 2101 may further include a non-volatile memory (non-volatile memory), for example, a read-only memory (read-only memory, ROM), a flash memory, a hard disk drive (hard disk drive, HDD), or a solid state drive (solid state drive, SSD).

The processor 2102 is a module for performing an operation, and may include any one or more of processors such as a controller (for example, a storage controller), a central processing unit (central processing unit, CPU), a micro graphics processing unit (graphics processing unit, GPU), a microprocessor (microprocessor, MP), a digital signal processor (digital signal processor, DSP), a coprocessor (assisting the central processing unit in completing corresponding processing and application), an application-specific integrated circuit (Application-Specific Integrated Circuit, ASIC), and a microcontroller unit (Microcontroller Unit, MCU).

The communication interface 2103 is configured to provide an information input or output for the at least one processor, and/or the communication interface 2103 may be configured to receive data sent from the outside and/or send data to the outside. The communication interface 2103 may be a wired link interface including, for example, an ethernet cable, or may be a wireless link (Wi-Fi, Bluetooth, universal wireless transmission, or another wireless communication technology) interface. Optionally, the communication interface 2103 may further include a transmitter (for example, a radio frequency transmitter or an antenna), a receiver, or the like coupled to the interface.

The bus 2104 may be a peripheral component interconnect (peripheral component interconnect, PCI) bus, an extended industry standard architecture (extended industry standard architecture, EISA) bus, or the like. The bus may be classified into an address bus, a data bus, a control bus, or the like. For ease of representation, only one line is used to represent the bus in FIG. 21, but this does not mean that there is only one bus or only one type of bus. The bus 2104 may include a path for transmitting information between components (for example, the memory 2101, the processor 2102, and the communication interface 2103) of the computing device 210.

In an embodiment of this application, the memory 2101 stores executable instructions. The processor 2102 executes the executable instructions to implement the foregoing data migration method, for example, the data processing method in the embodiment in FIG. 13, FIG. 15, FIG. 16, or the like. In other words, the memory 2101 stores instructions used to perform the data processing method.

An embodiment of this application further provides a computer-readable storage medium. The computer-readable storage medium includes instructions. The instructions are used to implement the foregoing data processing method, for example, the data processing method in the embodiment shown in FIG. 13, FIG. 15, or FIG. 16.

The computer-readable storage medium may be any usable medium that can be stored by a computing device, or a data storage device like a data center including one or more usable media. The usable medium may be a magnetic medium (for example, a floppy disk, a hard disk, or a magnetic tape), an optical medium (for example, a DVD), a semiconductor medium (for example, a solid state disk), or the like.

In embodiments of this application, a term like "example" or "for example" is used to represent giving an example, an illustration, or a description. Any embodiment or design scheme described as an "example" or "for example" in this application should not be explained as being more preferred or having more advantages than another embodiment or design scheme. Exactly, use of the word, for example, "example" or "for example", is intended to present a relative concept in a specific manner.

In embodiments of this application, "at least one" means one or more, and "a plurality of" means two or more. "At least one of the following items (pieces)" or a similar expression thereof means any combination of these items, including any combination of singular items (pieces) or plural items (pieces). For example, at least one of a, b, or c may indicate a, b, c, (a and b), (a and c), (b and c), or (a, b, and c), where a, b, and c may be singular or plural. The term "and/or" describes an association relationship between associated objects, and indicates that three relationships may exist. For example, A and/or B may indicate the following three cases: Only A exists, both A and B exist, and only B exists, where A and B may be singular or plural. The character "/" generally indicates an "or" relationship between associated objects.

In addition, unless otherwise stated, ordinal numbers such as "first" and "second" in the embodiments of this application are used to distinguish between a plurality of objects, but are not intended to limit an order, a time sequence, priorities, or importance of the plurality of objects. For example, a first container storage management apparatus and a second container storage management apparatus are merely for ease of description, but do not indicate differences in apparatus structures, deployment sequences, importance degrees, and the like of the first container storage management apparatus and the first container storage management apparatus.

Persons of ordinary skill in the art may understand that all or some of the steps of the foregoing embodiments may be implemented by hardware or a program instructing related hardware. The program may be stored in a computer-readable storage medium. The storage medium may be a read-only memory, a magnetic disk, an optical disc, or the like.

Finally, it should be noted that the foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments or make equivalent replacements to some technical features thereof, without departing from the protection scope of the technical solutions of embodiments of the present invention.

## Claims

1. A data processing method, applied to a first computing device, wherein the method comprises:
obtaining a first metadata stream of a first file system, wherein the first metadata stream is a streaming structure and comprises a plurality of records, each of the plurality of records comprises an identifier of one node in the first file system, an identifier of a parent node of the node, and an attribute of the node, and the node is a file or a directory; and
determining a hierarchy of a plurality of nodes in the first file system based on the first metadata stream.

2. The method according to claim 1, wherein
the attribute of the node comprises one or more of the following fields:
a change operation performed on the node, an identifier of a transaction related to the node, a sequence number of the record, storage layout information of the node, and an extended attribute of the node.

3. The method according to claim 1 or 2, wherein the method further comprises:
constructing a first file view, wherein the first file view comprises the hierarchy of the plurality of nodes in the first file system.

4. The method according to any one of claims 1 to 3, wherein data of the first file system is stored in a first storage disk, the first metadata stream is from a second computing device, and the second computing device is connected to the first storage disk.

5. The method according to claim 4, wherein the first computing device is located in a first data center, and the second computing device and the first storage disk are located in a second data center.

6. The method according to claim 4 or 5, wherein the method further comprises:
obtaining a first input/output I/O request, wherein the first I/O request indicates to perform a change operation on a first node; and
appending a first record to an end of the first metadata stream, wherein the first record comprises an identifier of the first node, an identifier of a parent node of the first node, and a first attribute of the first node, and the first attribute comprises a type of the change operation.

7. The method according to claim 6, wherein
the type of the change operation is new addition, and the first node is a newly added file or directory in the first file system.

8. The method according to claim 6, wherein the first node is a file or a directory that already exists in the first file system, and the first record further comprises a sequence number of the first record;
the first metadata stream further comprises a second record, wherein the second record comprises the identifier of the first node, the identifier of the parent node of the first node, a second attribute of the first node, and a sequence number of the second record, and the sequence number of the first record and the sequence number of the second record indicate that the first record is generated after the second record; and
the type of the change operation is update, deletion, or movement.

9. The method according to any one of claims 6 to 8, wherein the method further comprises:
sending a message to the second computing device, wherein the message indicates that the first metadata stream is changed, so that the second computing device performs the change operation on the first node based on the first record in the first metadata stream.

10. The method according to any one of claims 4 to 9, wherein the first metadata stream comprises a third record, the third record comprises an attribute of a second node in the first file system, and the second node is a file;
the attribute of the second node comprises storage layout information of the second node, and the storage layout information of the second node indicates a storage device to which the first storage disk belongs; and
the method further comprises:
obtaining a second I/O request, wherein the second I/O request indicates to read the second node; and
obtaining data of the second node from the storage device to which the first storage disk belongs.

11. The method according to claim 3, wherein the method further comprises:
when a newly added record appears at an end of the first metadata stream, updating the first file view based on an updated first metadata stream, wherein an updated first file view comprises an updated hierarchy of a plurality of nodes in the first file system.

12. The method according to any one of claims 1 to 11, wherein the method further comprises:
performing a merging operation on the first metadata stream, wherein the merging operation indicates to merge, into one record, a plurality of records corresponding to a same node in the first metadata stream.

13. The method according to any one of claims 1 to 12, wherein the method further comprises:
obtaining a second metadata stream of a second file system, wherein data of the second file system is stored in a second storage disk, the second metadata stream is from the second computing device connected to the second storage disk, or is from a third computing device connected to the second storage disk, and the second computing device is different from the third computing device, wherein
the second metadata stream is a streaming structure and comprises a plurality of records, and each of the plurality of records of the second metadata stream comprises an identifier of one node in the second file system, an identifier of a parent node of the node in the second file system, and an attribute of the node in the second file system; and
constructing a second file view, wherein the second file view comprises the hierarchy of the plurality of nodes in the first file system and a hierarchy of a plurality of nodes in the second file system, and the hierarchy of the plurality of nodes in the second file system is obtained based on the second metadata stream.

14. The method according to any one of claims 1 to 13, wherein the method further comprises:
scanning a hierarchy of a plurality of nodes in a third file system, wherein data of the third file system is stored in a third storage disk connected to the first computing device;
constructing a third metadata stream based on the hierarchy of the plurality of nodes in the third file system, wherein the third metadata stream is a streaming structure and comprises a plurality of records, and each of the plurality records in the third metadata stream comprises an identifier of one node in the third file system, an identifier of a parent node of the node in the third file system, and an attribute of the node in the third file system; and
sending the third metadata stream to the second computing device, so that the second computing device determines the hierarchy of the plurality of nodes in the third file system based on the third metadata stream.

15. The method according to claim 14, wherein the method further comprises:
constructing a third file view, wherein the third file view comprises the hierarchy of the plurality of nodes in the first file system and the hierarchy of the plurality of nodes in the third file system.

16. The method according to claim 14 or 15, wherein the second computing device and the first storage disk are comprised in a first storage device, the first computing device and the third storage disk are comprised in a second storage device, and the first storage device and the second storage device are heterogeneous.

17. The method according to any one of claims 14 to 16, wherein
the first file system is accessed by a host according to a first access protocol, the third file system is accessed by the host according to a second access protocol, and the first access protocol is different from the second access protocol.

18. The method according to any one of claims 1 to 17, wherein the first data stream comprises a fourth record, the fourth record comprises a node identifier field, a parent node identifier field, and an attribute of a third node, the node identifier field in the fourth record is an identifier of the third node, the parent node identifier field in the fourth record is an identifier of a fourth node, and the fourth node is a directory; and
the method further comprises:
receiving a third I/O request, wherein the third I/O request indicates to create a hard link node of the third node in a fifth node, and the fifth node is a directory; and
appending a fifth record, a sixth record, and a seventh record to the end of the first metadata stream, wherein
the fifth record comprises a node identifier field, a parent node identifier field, and the attribute of the third node, the node identifier field in the fifth record is the identifier of the third node, and the parent node identifier field in the fifth record is the identifier of the third node;
the sixth record comprises a node identifier field and a parent node identifier field, the node identifier field in the sixth record is the identifier of the third node, and the parent node identifier field in the sixth record is the identifier of the fourth node; and
the seventh record comprises a node identifier field and a parent node identifier field, the node identifier field in the seventh record is the identifier of the third node, and the parent node identifier field in the sixth record is an identifier of the fifth node.

19. The method according to claim 18, wherein the method further comprises:
obtaining a fourth I/O request, wherein the fourth I/O request indicates to delete the hard link node of the third node in the fifth node; and
appending an eighth record to the end of the first metadata stream, wherein
the eighth record comprises a node identifier field, a parent node identifier field, and the attribute of the third node, the node identifier field in the eighth record is the identifier of the third node, the parent node identifier field in the eighth record is the identifier of the fifth node, and the attribute of the third node in the eighth record comprises an identifier indicating a deletion operation.

20. The method according to claim 19, wherein the method further comprises:
if the hard link node of the third node does not exist, appending a ninth record and a tenth record to the end of the first data stream, wherein
the ninth record comprises a node identifier field, a parent node identifier field, and the attribute of the third node, the node identifier field in the ninth record is the identifier of the third node, and the parent node identifier field in the ninth record is the identifier of the fourth node; and
the tenth record comprises a node identifier field, a parent node identifier field, and the attribute of the third node, the node identifier field in the tenth record is the identifier of the third node, the parent node identifier field in the tenth record is the identifier of the third node, and the attribute of the third node in the tenth record comprises the identifier indicating the deletion operation.

21. A metadata sharing system, wherein the metadata sharing system comprises a first computing device and a second computing device;
the second computing device is configured to:
scan a hierarchy of a plurality of nodes in a first file system, wherein data of the first file system is stored in a first storage disk, and the second computing device is connected to the first storage disk;
construct a first metadata stream based on the hierarchy of the plurality of nodes in the first file system, wherein the first metadata stream is a streaming structure and comprises a plurality of records, and each record in the first metadata stream comprises an identifier of one node in the first file system, an identifier of a parent node of the node in the first file system, and an attribute of the node in the first file system; and
send the first data stream to the first computing device; and
the first computing device is configured to:
obtain the first data stream from the second computing device; and
determine the hierarchy of the plurality of nodes in the first file system based on the first metadata stream.

22. The system according to claim 21, wherein the first computing device is further configured to construct a first file view, wherein the first file view comprises the hierarchy of the plurality of nodes in the first file system; and
the second computing device is further configured to construct a second file view, wherein the second file view comprises the hierarchy of the plurality of nodes in the first file system.

23. The system according to claim 21 or 22, wherein the first computing device is further configured to:
obtain a first input/output I/O request, wherein the first I/O request indicates to perform a change operation on a first node; and
append a first record to an end of the first metadata stream, wherein the first record comprises an inode of the first node, a pinode of the first node, and a first attribute of the first node, wherein the first attribute of the first node comprises a type of the change operation; and
the second computing device is further configured to:
obtain the first record in the first metadata stream; and
perform the change operation on the first node based on the first record in the first metadata stream.

24. The system according to any one of claim 21 to 23, wherein the first computing device is further configured to:
when a newly added record appears at the end of the first metadata stream, update the first file view based on an updated first metadata stream, wherein an updated first file view comprises an updated hierarchy of a plurality of nodes in the first file system; and
the second computing device is further configured to:
when the newly added record appears at the end of the first metadata stream, update the second file view based on the updated first metadata stream, wherein an updated second file view comprises the updated hierarchy of the plurality of nodes in the first file system.

25. The system according to any one of claims 21 to 24, wherein the metadata stream comprises a second record, the second record comprises an attribute of a second node in the first file system, and the second node is a file;
the attribute of the second node comprises storage layout information of the second node, and the storage layout information of the second node indicates a storage device to which the first storage disk belongs; and
the first computing device is further configured to:
obtain a second I/O request, wherein the second I/O request indicates to read data of the second node; and
obtain the data of the second node from the storage device to which the first storage disk belongs.

26. The system according to any one of claim 21 to 25, wherein the first computing device or the second computing device is further configured to:
perform a merging operation on the first metadata stream, wherein the merging operation indicates to merge, into one record, a plurality of records corresponding to a same node in the first metadata stream.

27. The system according to any one of claims 21 to 26, wherein the metadata sharing system further comprises a third computing device, and the third computing device is configured to:
send a second metadata stream of a second file system to the first computing device, wherein data of the second file system is stored in a second storage disk connected to the third computing device, the second metadata stream is a streaming structure and comprises a plurality of records, and each of the plurality of records in the second metadata stream comprises an identifier of one node in the second file system, an identifier of a parent node of the node in the second file system, and an attribute of the node in the second file system; and
the first computing device is further configured to:
obtain the second metadata stream; and
construct a third file view, wherein the third file view comprises the hierarchy of the plurality of nodes in the first file system and a hierarchy of a plurality of nodes in the second file system, and the hierarchy of the plurality of nodes in the second file system is obtained based on the second metadata stream.

28. The system according to any one of claim 21 to 27, wherein the first computing device is further configured to:
scan a hierarchy of a plurality of nodes in a third file system, wherein data of the third file system is stored in a third storage disk, and the first computing device is connected to the third storage disk;
construct a third metadata stream based on the hierarchy of the plurality of nodes in the third file system, wherein the third metadata stream is a streaming structure and comprises a plurality of records, and each of the plurality records in the third metadata stream comprises an identifier of one node in the third file system, an identifier of a parent node of the node in the third file system, and an attribute of the node in the third file system; and
send the third metadata stream to the second computing device; and
the second computing device is further configured to:
obtain the third data stream from the first computing device; and
determine the hierarchy of the plurality of nodes in the third file system based on the third metadata stream.

29. The system according to claim 28, wherein the second computing device is further configured to:
construct a fourth file view, wherein the fourth file view comprises the hierarchy of the plurality of nodes in the first file system and the hierarchy of the plurality of nodes in the third file system.

30. The system according to claim 28 or 29, wherein
the second computing device and the first storage disk are comprised in a first storage device, the first computing device and the third storage disk are comprised in a second storage device, and the first storage device and the second storage device are heterogeneous.

31. The system according to claim 30, wherein
the first file system is accessed by a host according to a first access protocol, the third file system is accessed by the host according to a second access protocol, and the first access protocol is different from the second access protocol.

32. A computing apparatus, wherein the computing apparatus comprises a communication module and a processing module;
the communication module is configured to obtain a first metadata stream of a first file system, wherein the first metadata stream is from a second computing device, the first metadata stream is a streaming structure and comprises a plurality of records, and each of the plurality of records comprises an identifier of one node in the first file system, an identifier of a parent node of the node, and an attribute of the node; and
the processing module is further configured to determine a hierarchy of a plurality of nodes in the first file system based on the first metadata stream.

33. A computing device, wherein the computing device comprises a processor and a memory; and
the processor is configured to execute instructions stored in the memory, to enable the computing device to implement the method according to any one of claims 1 to 20.

34. A computer-readable storage medium, comprising computer program instructions, wherein when the computer program instructions are executed by a computing device, the computing device is enabled to implement the method according to any one of claims 1 to 20.

35. A computer program product comprising instructions, wherein when the instructions are executed by a computing device, the computing device is enabled to implement the method according to any one of claims 1 to 20.

36. A storage system, comprising a storage disk and the computing device according to claim 33, wherein the computing device and the storage disk are connected through a bus or a network.
